# EUROPEAN PATENT SPECIFICATION

(11) **EP 2 128 214 B1**
(45) Date of publication and mention of the grant of the patent: **20.03.2013**
(21) Application number: 09009679.3
(22) Date of filing: 02.06.1997
(51) Int. Cl.: C09K 3/00, C09K 3/18, C09D 1/00, C09D 5/14, C09D 5/16, C09D 127/12, C09D 183/04, B05D 5/00, A61L 27/00, C08K 3/22, C09D 183/10

(54) **Antifouling member and antifouling coating composition**
Fäulnisverhinderndes Element und fäulnisverhindernde Beschichtungszusammensetzung
Élément antisalissure et composition de revêtement antisalissure

(30) Priority: 24.09.1996 JP 28722596; 31.05.1996 JP 17538696
(43) Date of publication of application: 02.12.2009
(62) Divisional of application: 97924296.3
(73) Proprietor: TOTO LTD., Kitakyushu-shi Fukuoka 802-8601 (JP)
(72) Inventor: Watanabe, Toshiya, Kitakyushu-shi Fukouka 802 (JP); Hayakawa, Makoto, Kitakyushu-shi Fukouka 802 (JP); Machida, Mitsuyoshi, Kitakyushu-shi Fukouka 802 (JP)
(74) Representative: Grünecker, Kinkeldey, Stockmair & Schwanhäusser

(56) References cited:
- JP-A- 8 034 973
- JP-A- 8 134 381
- JP-A- 8 134 437
- US-A- 5 331 074

## Description

### [BACKGROUND OF THE INVENTION]

### Field of the Invention

The present invention relates to a member having a surface on which a material is less likely to be deposited, more specifically a member having an antifouling surface on which the so-called "stains," such as deposits and contaminants, are less likely to be deposited, and a composition for the production of a member having such a surface. The present invention also relates to a method for imparting, to the surface of a desired member, such a property that a material is less likely to be deposited thereon, more specifically a method for imparting such a property that stains, such as deposits and contaminants, are less likely to be deposited.

### Background Art

In the field of buildings and coatings, the pollution of the environment has posed a problem of contamination of exterior materials for buildings, outdoor buildings, and coatings provided thereon.

Dust and particles floating in the air deposit on the roof and the outer wall of buildings in fine weather. Upon exposure to rainfall, the deposits flow together with rainwater and flow down along the outer wall of the building. Further, in rainy weather, dust and particles floating in the air are carried by rain and flow down on the outer wall of the building and the surface of the outdoor building. As a result, the contaminant adheres on the surface along the course of the rainwater. As the surface dries, soil appears in a stripe pattern on the surface.

Combustion products, such as carbon black, municipal dust, and contaminants of inorganic materials, such as clay particles, constitute the soil on the coating of the exterior material for the building. Such a wide variety of contaminants are considered to render measures for antifouling complicate (Yoshinori Kitsutaka, "Gaiheki Shiage Zairyou No Osen No Sokushin Shiken Houhou (Accelerated Testing Method for Contamination of Finish Materials of Outer Wall)," Journal of Structural and Construction Engineering (Transactions of AIJ), No. 404, October 1989, pp. 15-24).

The use of a water-repellent paint, such as polytetrafluoroethylene (PTFE), has hitherto been considered preferable for preventing the exterior of the building and the like from being soiled. In recent years, however, that the surface of the coating is made hydrophilic as much as possible has become recognized as more effective for municipal dust containing a large amount of a hydrophobic component (Kobunshi, Vol. 44, May 1995. p. 307). Accordingly, coating of buildings with a hydrophilic graft polymer has been proposed in a newspaper ("Japan Chemical Week", January 30, 1995). According to this report, the coating has a hydrophilicity of 30 to 40° in terms of contact angle thereof with water.

Inorganic dust typified by clay minerals has a contact angle thereof with water of 20° to 50° and, hence, has affinity for the graft polymer having a contact angle thereof with water of 30° to 40° and is likely to adhere on the surface of the graft polymer. Therefore, it is considered that the coating of the graft polymer cannot satisfactorily prevent soiling with inorganic dust.

Although there are proposals wherein the surface of a member is rendered water-repellent or hydrophilic to keep the surface clean, such as those described above, there is still room for improvement in the surface cleaning activity.

### [SUMMARY OF THE INVENTION]

The present inventors have now found that a surface having both a hydrophobic portion, and a hydrophilic portion induced by a photocatalyst has a very good antifouling property. The present invention has been made based on such finding.

Accordingly, an object of the present invention is to provide a member having a surface on which a material is less likely to be deposited.

Another object of the present invention is to provide a member having an antifouling surface on which the so-called "stains," such as deposits and contaminants, are less likely to be deposited.

The member according to the present invention has both a hydrophobic portion, and a hydrophilic portion induced by a photocatalyst, the hydrophobic portion and the hydrophilic portion being present in a microscopically dispersed and exposed state on the surface of the member.

In particular, the present invention provides
(1) a member comprising: a substrate; and a surface layer provided on the substrate, the surface layer comprising a photocatalytic oxide, a silicone resin or silica, and a water-repellent fluororesin, the silicone or silica and the water-repellent fluororesin being present in a microscopically dispersed and exposed state on the outermost surface of the surface layer;
(2) The member according to (1), wherein the photocatalytic oxide is selected from the group consisting of anatase form of titanium oxide, rutile form of titanium oxide, zinc oxide, tin oxide, ferric oxide, dibismuth trioxide, tungsten trioxide, and strontium titanate;
(3) The member according to (1) or (2), wherein the photocatalytic oxide hydrophilifies the silicone resin or silica present on the outermost surface of the member by photocatalytic action created in response to photoexcitation;
(4) The member according to (1) or (2), wherein the silicone resin is represented by the following average composition formula (I)

   RₚSiO_{(4-p)/2} (I)

   wherein
   R represents a group selected from the group consisting of a hydrogen atom and one or more organic groups;
   X represents an alkoxy group or a halogen atom; and
   p is a number satisfying 0 < p < 2
(5) The member according to (4), wherein the organic group is an alkyl or an aryl group;
(6) The member according to any one of (1) to (5), wherein the silica is amorphous silica;
(7) The member according to any one of (1) to 6), wherein the presence of a hydrophobic portion derived from a hydrophobic resin and a hydrophilic portion derived from a silicone resin or silica in microscopically dispersed and exposed state on the outermost surface prevents both a hydrophilic material and a hydrophobic material from being deposited on the surface of the member, thus permitting the surface of the member to be kept clean;
(8) The member according to any one of (1) to (7), wherein a hydrophobic portion derived from the water-repellent fluororesin and a hydrophilic portion derived from the silicone or silica each are present in at least one place per 10 to 100 nm² on the outermost surface of the surface layer;
(9) The member according to (8), which has such a property that a biopolymer is less likely to be deposited thereon.
(10) The member according to (9), which is used as an anti-thrombotenic material, an anti-protein-depositable material, and an anti-lipid-adhesion material;
(11) The member according to (10), which is a contact lens or a urinary catheter, a percutaneous device, an artificial organ, a blood bag, a urine-collecting bag, a lung drainage, or a tube for connection between said members.
(12) The member according to any one of (1) to (7), wherein a hydrophobic portion derived from the water-repellent fluororesin and a hydrophilic portion derived from the silicone or silica each are present in at least one place per 10 nm to 1 µm² on the outermost surface of the surface layer;
(13) The member according to (10), which has such a property that an organism is less likely to be deposited thereon;
(14) The member according to (13), which is used as a surface material in a material for the bottom of a ship, an outer wall material, a bathroom material, a bathtub material, a material for a water tank for the appreciation, or a surface material for equipment utilizing circulating water in its area which comes into contact with the circulating water;
(15) The member according to any one of (1) to (7), wherein a hydrophobic portion derived from the water-repellent fluororesin and a hydrophilic portion derived from the silicone or silica each are present in at least one place per mm² on the outermost surface of the surface layer;
(16) The member according to (15), which has such a property that a stain derived from suspended smoke and soot in the air is less likely to be deposited, or the stain, which has been once deposited thereon can be easily removed;
(17) The member according to (16), which is used as a building material for outdoors, a cover for a solar battery, a cover for a heat collector for a solar water heater, a handrail, an internal wall for a tunnel, a sound insulating wall, a sound barrier, a guard fence, a road structure, a blind, an insulator, a wheel, or a body for a vehicle.
(18) The member according to any one of (1) to (7), which has such a property that prevents growth of water droplets deposited on the surface thereof;
(19) The member according to (18), which is used as a windowpane for a building, a windowpane for a vehicle, a windshield for a vehicle, a mirror for a vehicle, a road mirror, a lavatory mirror, a cover for an instrument board, a lens for spectacles, a helmet shield, goggles, or a showcase for retention of heat;
(20) The member according to any one of (1) to (7), wherein water droplets or ice and snow are less likely to be deposited thereon, or water droplets, even when once deposited thereon, can be easily removed;
(21) The member according to (20), which is used as a fin for a heat exchanger, an insulator, a bathtub, a counter for a lavatory, a kitchen counter, a roof material, a roof gutter, an antenna, or a power line;
(22) The member according to (1) to (16), wherein the surface layer further comprises silver, copper, zinc, or a platinum group metal.
   Further, there is provided
(23) a composition for application on a substrate to form a surface layer having antifouling activity on the substrate, said composition comprising:
   (a) a silicone resin coating precursor capable of forming a silicone resin coating or a silica coating precursor capable of forming a silica coating;
   (b) a photocatalytic oxide dispersed in the coating precursor (a); and
   (c) a water-repellent fluororesin dispersed in the coating precursor (a);
(24) The composition according to (23), wherein the silicone resin coating precursor is a siloxane represented by the average composition formula

   RₚSiX_{q}O_{(4-p-q)/2}

   wherein
   R is as defined above in connection with the formula (I);
   X represents an alkoxy group or a halogen atom; and
   p is a number satisfying 0 < p < 2 and q is a number satisfying 0 < q < 4;
(25) The composition according to (18), wherein the silicone resin coating precursor is a hydrolyzable silane derivative represented by the general formula

   RₚSiX₄₋ₚ

   wherein R is as defined above in connection with the formula (I);
   X represents an alkoxy group or a halogen atom; and
   p is 1 or 2;
(26) The composition according to (23), wherein the silica coating precursor is a silicate represented by the average composition formula

   SiX_{q}O_{(4-q)/2}

   wherein X represents an alkoxy group or a halogen atom and q is a number satisfying 0 < q < 4;
(27) The composition according to (23), wherein the silica coating precursor is a tetrafunctional hydrolyzable silane derivative represented by the general formula

   SiX₄

   wherein X represents an alkoxy group or a halogen atom;
(28) The composition according to any one of (23) to (27), wherein the photocatalytic oxide is selected from the group consisting of anatase form of titanium oxide, rutile form of titanium oxide, zinc oxide, tin oxide, ferric oxide, dibismuth trioxide, tungsten trioxide, and strontium titanate.
   The present invention further provides
(29) a process for producing the member according to any one of (1) to (22), comprising the steps of:
   applying the composition according to any one of (23) to (28) on a substrate;
   subjecting the silicone resin coating precursor or the silica coating precursor to such a reaction that the silicone resin coating precursor or the silica coating precursor is converted to a silicone coating or a silica coating, thus forming an antifouling coating on the substrate, the antifouling coating comprising the silicone or silica and the water-repellent fluororesin microscopically dispersed and exposed on the outermost surface of the surface layer;
(30) A process for imparting an antifouling property on a desired surface, said process comprising the steps of:
   applying the composition according to any one of (22) to (28) onto a surface to which an antifouling property is to be imparted;
   curing the resultant silicone resin coating precursor or the silica coating precursor to form an antifouling coating on the substrate, the antifouling coating comprising the silicone or silica and the water-repellent fluororesin microscopically dispersed and exposed on the outermost surface of the surface layer; and
(31) An antifouling member produced by the process according to (29) or (30)
   Further, the present invention relates to
(32) a member comprising: a substrate; and a surface layer provided on the substrate, the surface layer comprising a hydrophobic resin and a photocatalytic oxide, the hydrophobic resin and the photocatalytic oxide being present in a microscopically dispersed and exposed state on the outermost surface of the surface layer, the photocatalytic oxide being self-hydrophilified or functioning to hydrophilify the photocatalytic oxide still remaining unhydrophilified present around the photocatalytic oxide by photocatalytic action created in response to photoexcitation;
(33) The member according to (32), wherein the surface layer further comprises an inorganic oxide which, together with the hydrophobic resin and the photocatalytic oxide, is microscopically dispersed and exposed on the outermost surface of the surface layer, the photocatalytic oxide functioning to hydrophilify the inorganic oxide by photocatalytic action in response to photoexcitation;
(34) The member according to (32), wherein the surface layer is a layer comprising the hydrophobic resin, the photocatalytic oxide being dispersed in the layer, the hydrophobic resin and the photocatalytic oxide being present in a microscopically dispersed and exposed state on the outermost surface of the surface layer;
(35) The member according to (32), wherein the surface layer further comprises an inorganic oxide which, together with the hydrophobic resin and the photocatalytic oxide, is microscopically dispersed and exposed on the outermost surface of the surface layer, the photocatalytic oxide functioning to hydrophilify the inorganic oxide by photocatalytic action in response to photoexcitation;
(36) The member according to (31), wherein the surface layer comprises a layer, formed of a photocatalytic oxide, and a layer, formed of a hydrophobic resin, partially laminated on the layer formed of the photocatalytic oxide, the hydrophobic resin and the photocatalytic oxide being present in a microscopically dispersed and exposed state on the outermost surface of the surface layer as a result of the partial lamination of the hydrophobic resin layer on the layer formed of the photocatalytic oxide.
(37) The member according to (32), wherein the layer formed of the photocatalytic oxide further comprises an inorganic oxide which, together with the hydrophobic resin and the photocatalytic oxide, is present in a microscopically dispersed and exposed state on the outermost surface of the surface layer, the photocatalytic oxide functioning to hydrophilify the inorganic oxide by photocatalytic action in response to photoexcitation.
(38) The member according to any one of (32) to (37), wherein the photocatalytic oxide is selected from the group consisting of anatase form of titanium oxide, rutile form of titanium oxide, zinc oxide, tin oxide, ferric oxide, dibismuth trioxide, tungsten trioxide, and strontium titanate.
(39) The member according to any one of (27) to (33), wherein the inorganic oxide is selected from the group consisting of silica, alumina, water glass, silicate, aluminosilicate, zirconia, ceria, tin oxide, calcia, magnesia, and amorphous titania;
(40) The member according to any one of (27) to (34), wherein the hydrophobic resin is selected from the group consisting of a fluororesin, an acrylic resin, a urethane resin, a polyester resin, a vinyl resin, PET, and an acrylic silicone.
(41) The member according to any one of (27) to (35), wherein the presence of a hydrophobic portion derived from a hydrophobic resin and a hydrophilic portion derived from the photocatalytic oxide or the inorganic oxide in a microscopically dispersed and exposed state on the outermost surface prevents both a hydrophilic material and a hydrophobic material from being deposited on the surface of the member, thus permitting the surface of the member to be kept clean;
(42) The member according to any one of (27) to (36) wherein a hydrophobic portion derived from the water-repellent resin and a hydrophilic portion derived from photocatalytic oxide or the inorganic oxide each are present in at least one place per 10 to 100 nm² on the outermost surface of the surface layer.
(43) The member according to (42), which has such a property that a biopolymer is less likely to be deposited thereon.
(44) The member according to (43), which is used as an anti-thrombotenic material, an anti-protein-depositable material, and an anti-lipid-adhesion material;
(45) The member according to (44), which is a contact lens or a urinary catheter, a percutaneous device, an artificial organ, a blood bag, a urine-collecting bag, a lung drainage, or a tube for connection between said members.
(46) The member according to any one of (32) to (44), wherein a hydrophobic portion derived from the water-repellent resin and a hydrophilic portion derived from the photocatalytic oxide or the inorganic oxide each are present in at least one place per 10 nm² to 1 µm² on the outermost surface of the surface layer;
(47) The member according to any one of (46), which is used as a surface material in a material for the bottom of a ship, an outer wall material, a bathroom material, a bathtub material, a material for a water tank for the appreciation, or a surface material for equipment utilizing circulating water in its area which comes into contact with the circulating water;
(48) The member according to any one of (32) to (41), wherein a hydrophobic portion derived from the water-repellent fluororesin and a hydrophilic portion derived from the silicone or silica each are present in at least one place per 1 mm² on the outermost surface of the surface layer.
(49) The member according to (43), which has such a property that a stain derived from suspended smoke and soot in the air is less likely to be deposited thereon, or the stain, which has been once deposited thereon can be easily removed;
(50) The member according to (49), which is used as a building material for outdoors, a cover for a solar battery, a cover for a heat collector for a solar water heater, a handrail, an internal wall for a tunnel, a sound insulating wall, a sound barrier, a guard fence, a road structure, a blind, an insulator, a wheel, or a body for a vehicle.
(51) The member according to any one of (32) to (41), which has such a property that prevents growth of water droplets deposited on the surface thereof;
(52) The member according to (18), which can be applied for preventing fogging or ensuring the visibility of glass, a mirror, a lens, a prism or the like, more specifically a windowpane for a building, a windowpane for a vehicle, a windshield for a vehicle, a mirror for a vehicle, a road mirror, a lavatory mirror, a cover for an instrument board, a lens for spectacles, a helmet shield, goggles, or a showcase for retention of heat or can be used as a fin for a heat exchanger, an insulator, a bathtub, a counter for a lavatory, a kitchen counter, a roof material, a roof gutter, an antenna, or a power line;
(53) The member according to any one of (32) to (41), wherein water droplets or ice and snow are less likely to be deposited on the surface thereof, or water droplets, even when once deposited thereon, can be easily removed
(54) The member according to claim (53), which can be applied for preventing fogging or ensuring the visibility of glass, a mirror, a lens, a prism or the like, more specifically a windowpane for a building, a windowpane for a vehicle, a windshield for a vehicle, a mirror for a vehicle, a road mirror, a lavatory mirror, a cover for an instrument board, a lens for spectacles, a helmet shield, goggles, or a showcase for retention of heat or can be used as a fin for a heat exchanger, an insulator, a bathtub, a counter for a lavatory, a kitchen counter, a roof material, a roof gutter, an antenna, or a power line;
(55) The member according to claim (32) to (54), wherein the surface layer further comprises silver, copper, or zinc.
   The present invention further provides
(56) a process for producing the member according to (34), comprising the step of
   coating a substrate with a layer comprising the hydrophobic resin with the photocatalytic oxide being dispersed therein.
(57) The process according to (56), which further comprises the step of, after coating the substrate with the layer comprising the hydrophobic resin, removing the surface of the resultant layer;
(58) A process for producing the member according to (35), comprising the step of
   coating a substrate with a layer comprising the hydrophobic resin containing the inorganic oxide and the photocatalytic oxide dispersed therein;
(59) The process according to (58), which further comprises the step of, after coating the substrate with the layer comprising the hydrophobic resin, removing the surface of the resultant layer;
(60) A process for producing the member according to (34), comprising the steps of:
   hydrophobifying the surface of the photocatalytic oxide with a hydrophobifying agent;
   applying a hydrophobic resin precursor composition capable of forming a hydrophobic resin layer on the surface of a substrate;
   coating the photocatalytic oxide, the surface of which has been hydrophobified with the hydrophobifying agent, onto the composition layer before conversion of the composition to a hydrophobic resin layer;
   removing the hydrophobifying agent from the surface of the photocatalytic oxide; and
   subjecting the precursor composition to such a reaction that the precursor composition is converted to the hydrophobic resin layer;
(61) A process for producing the member according to (35), comprising the steps of:
   hydrophobifying the surface of the inorganic oxide and/or the photocatalytic oxide with a hydrophobifying agent;
   applying a hydrophobic resin precursor composition capable of forming a hydrophobic resin layer on the surface of a substrate;
   coating the photocatalytic oxide, the surface of which has been hydrophobified with the hydrophobifying agent, onto the composition layer before conversion of the composition to a hydrophobic resin layer;
   removing the hydrophobifying agent from the surface of the photocatalytic oxide and/or the photocatalytic oxide; and
   subjecting the precursor composition to such a reaction that the precursor composition is converted to a hydrophobic resin layer;
(62) A process for producing the member according to (36) comprising the steps of:
   forming a layer comprising the photocatalytic oxide on the surface of the substrate;
   partially applying thereon a hydrophobic resin precursor composition capable of forming a hydrophobic layer to form a coating; and
   subjecting the coating to such a reaction that the coating is converted to a hydrophobic resin layer;
(63) The process according to (53), wherein the precursor composition is partially applied onto the layer comprising the photocatalytic oxide serving also as the inorganic oxide through a slit having a specific opening pattern to form the coating;
(64) A process for producing the member according to (37), comprising the steps of:
   forming a layer comprising the inorganic oxide and the photocatalytic oxide on the surface of a substrate;
   partially applying thereon a hydrophobic resin precursor composition capable of forming a hydrophobic resin layer to form a coating; and
   subjecting the coating to such a reaction that the coating is converted to a hydrophobic resin layer;
(65) The process according to (64), wherein the composition is partially applied onto the layer comprising the photocatalytic oxide serving also as the inorganic oxide through a slit having a specific opening pattern to form the coating;
(66) A process for producing the member according to (36), comprising the steps of:
   forming a layer comprising the photocatalytic oxide on the surface of a substrate;
   applying a composition comprising a photodecomposable hydrophobic material and a hydrophobic resin on the photocatalytic oxide layer to form a coating;
   irradiating the coating with light to decompose and remove the photodecomposable hydrophobic material; and
   subjecting the coating to such a reaction that the coating is converted to a hydrophobic resin layer;
(67) A process for producing the member according to (37), comprising the steps of:
   forming a layer comprising the inorganic oxide and the photocatalytic oxide on the surface of a substrate;
   applying a composition comprising a photodecomposable hydrophobic material and a hydrophobic resin on the photocatalytic oxide layer to form a coating; and
   irradiating the coating with light to decompose and remove the photodecomposable hydrophobic material and, in addition, to covert the coating to a hydrophobic resin layer;
(68) A process for producing the member according to claim (36), comprising the steps of:
   forming a layer comprising the photocatalytic oxide on the surface of a substrate;
   applying a composition comprising a hydrophobic material soluble in a specific solvent and a hydrophobic resin on the photocatalytic oxide layer to form a coating; and
   bringing the specific solvent into contact with the surface of the coating to remove the hydrophobic material, thereby converting the coating to a hydrophobic resin layer.
(69) A process for producing the member according to claim (37), comprising the steps of:
   forming a layer comprising the inorganic oxide and the photocatalytic oxide on the surface of a substrate;
   applying thereon a composition comprising a hydrophobic material soluble in a specific solvent and a hydrophobic resin on the photocatalytic oxide layer to form a coating; and
   bringing the specific solvent into contact with the surface of the coating to remove the hydrophobic material, thereby converting the coating to a hydrophobic resin layer.
      Furthermore, the present invention provides
(70) A member comprising a hydrophobic portion, and a hydrophilic portion induced by a photocatalyst, the hydrophobic portion and the hydrophilic portion being present in a microscopically dispersed and exposed state on the surface of the member.

According to a first aspect of the present invention, there is provided a member comprising: a substrate; and a surface layer provided on the substrate, the surface layer comprising a photocatalytic oxide, a silicone resin or silica, and a water-repellent fluororesin, the silicone or silica and the water-repellent fluororesin being present in a microscopically dispersed and exposed state on the outermost surface of the surface layer.

According to a second aspect of the present invention, there is provided a member comprising: a substrate; and a surface layer provided on the substrate, the surface layer comprising a hydrophobic resin and a photocatalytic oxide,
the hydrophobic resin and the photocatalytic oxide being present in a microscopically dispersed and exposed state on the outermost surface of the member, the photocatalytic oxide being self-hydrophilified or functioning to hydrophilify the photocatalytic oxide still remaining unhydrophilified present around the photocatalytic oxide by photocatalytic action created in response to photoexcitation.

In both the aspects of the present invention, the hydrophobic portion derived from the hydrophobic resin and the hydrophilic portion induced by the photocatalyst are present in a microscopically dispersed state on the outermost surface of the member. As a result of the hydrophobic portion and the hydrophilic portion adjacent to each other, a hydrophilic deposit having affinity for the hydrophilic portion does not have affinity for the adjacent water-repellent portion. On the other hand, a hydrophobic deposit having affinity for the hydrophobic portion does not have affinity for the adjacent hydrophilic portion. Therefore, it is considered that both the hydrophilic deposit and the hydrophobic deposit cannot deposit on the surface of the member, and, even when deposited on the surface of the member, are unstable and hence are easily removed, permitting the surface of the member to be kept clean. In this connection, however, it should be noted that the above description is hypothetical and the present invention is not limited to the above mechanism alone.

### [BRIEF DESCRIPTION OF THE DRAWINGS]

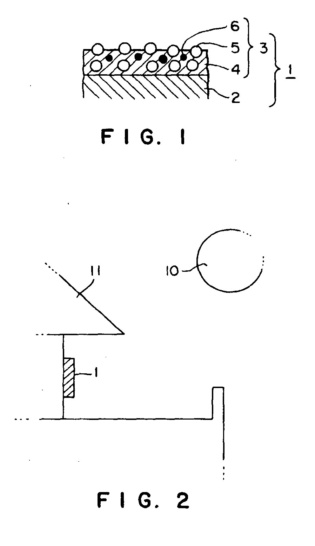

Fig. 1 is a diagram showing the structure of a member according to a first aspect of the present invention. A member 1 according to the present invention comprises a substrate 2 and a surface layer 3 provided on the substrate 2. The surface layer 3 comprises: a silicone or silica layer 4; and a water-repellent fluororesin 5 and a photocatalytic oxide 6 dispersed in the silicone or silica layer 4. A part of the water-repellent fluororesin 5 is exposed on the outermost surface of the silicone or silica layer 4.
Fig. 2 is a diagram illustrating how to install a test sample in Example 3. In the drawing, the member 1 according to the present invention is installed on the wall surface of a house 11 so as to be exposed to sunlight from the sun 10.

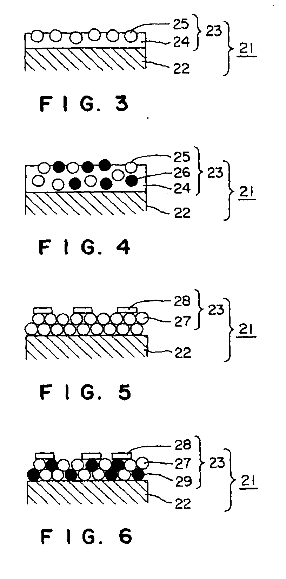

Fig. 3 is a diagram showing the structure of a member according to the second aspect of the present invention. A member 21 according to the present invention comprises a surface layer 23 provided on a substrate 22. The surface layer 23 comprises a hydrophobic resin layer 24 and a photocatalytic oxide 25 dispersed in the layer 24, the photocatalytic oxide 25 being present in an exposed state on the outermost surface of the layer 24.
Fig. 4 is a diagram of a member having the same construction as the member according to the aspect shown in Fig. 3, except that the surface layer 23 further comprises an inorganic oxide 26.
Fig. 5 is a diagram showing a second embodiment of the second aspect of the present invention. A member 21 according to the present invention comprises a layer 24, formed of a photocatalytic oxide, and a layer 28, formed of a hydrophobic resin, provided on the layer 24. In this case, the layer 28 formed of a hydrophobic resin is laminated onto a part of the layer 24. As a result, the hydrophobic resin and the photocatalytic oxide are present in a microscopically dispersed and exposed state on the outermost surface of the surface layer 23.
Fig. 6 is a diagram of a member having the same construction as the member according to the embodiment shown in Fig. 5, except that the layer 24 comprising a photocatalytic oxide further comprises an inorganic oxide 29.

### [DETAILED DESCRIPTION OF THE INVENTION]

### Definition

In the present invention, the terms "antifouling property" and "antifouling activity" are used to mean any of such properties that a certain surface is inert to deposition of a material thereon, that is, a property that various materials are less likely to be deposited on a certain surface, and a property that materials, even when once deposited on a certain surface, can be easily removed.

Further, in the present invention, the presence of the hydrophobic portion and the hydrophilic portion in a "microscopically dispersed state" on the surface means that the hydrophobic portion and the hydrophilic portion are homogeneously present per unit area of not more than about 0.1 mm².

Further, in the present invention, the term "photocatalyst" used herein refers to a material which, when exposed to light (excitation light) having higher energy (i.e., shorter wavelength) than the energy gap between the conduction band and the valence band of the crystal, can cause excitation (photoexcitation) of electrons in the valence band to produce a conduction electron and a hole. Photocatalytic oxides usable herein include oxides, for example, anatase form of titanium oxide, rutile form of titanium oxide, zinc oxide, tin oxide, ferric oxide, dibismuth trioxide, tungsten trioxide, and strontium titanate.

### Antifouling member according to first aspect of invention

The member according to the first aspect of the present invention comprises a substrate and a surface layer provided on the substrate, the surface layer comprising a photocatalytic oxide, a silicone resin or silica, and a water-repellent fluororesin. The silicone or silica and the water-repellent fluororesin are present in a microscopically dispersed and exposed state on the outermost surface of the surface layer.

In this aspect of the invention, the presence of the water-repellent fluororesin in an exposed state on the outermost surface results in the formation of a hydrophobic portion on the outermost surface of the member.

On the other hand, silicone or silica is exposed on the outermost surface. According to the present invention, upon exposure of the surface of the member to light, the hydrophilic nature is further imparted to the silicone or silica by the action of the photocatalytic oxide present in the surface layer, and this hydrophilic nature persists so far as light irradiation is continued. Further, even though the light irradiation is once stopped, the hydrophilic nature is again imparted upon resumption of the light irradiation. The mechanism of hydrophilification has not been elucidated yet. However, it is considered that, for example, in the case of the silicone, an organic group bonded to a silicon atom in the silicone molecule is at least partially replaced by a hydroxyl group to exhibit hydrophilicity. This hydrophilification results in the formation of a hydrophilic portion on the outermost surface of the member according to the present invention.

As described above, as a result of the presence of both the hydrophobic portion and the hydrophilic portion induced by the photocatalyst on the outermost surface of the member, both hydrophilic deposits and hydrophobic deposits cannot be deposited on the surface of the member, and, even when deposited on the surface of the member, are unstable and hence are easily removed, permitting the surface of the member to be kept clean.

A preferred embodiment of the first aspect of the present invention is shown in Fig. 1. In Fig. 1, a member 1 comprises a substrate 2 and a surface layer 3 provided on the substrate 2. The surface layer 3 comprises: a silicone or silica layer 4; and a water-repellent fluororesin 5 and a photocatalytic oxide 6 dispersed in this layer 4. A part of the water-repellent fluororesin 5 is exposed on the outermost surface of the silicone or silica layer 4. In the embodiment shown in Fig. 1, the silicone or silica is provided as having a layer structure, while the water-repellent fluororesin and the photocatalytic oxide are provided as a particle.

In this embodiment, the photocatalytic oxide may be used as described above. When the photocatalytic oxide is anatase form of titanium oxide, rutile form of titanium oxide, zinc oxide, or strontium titanate, light from sunlight, a room lamp, a fluorescent lamp, a mercury lamp, an incandescent lamp, a xenon lamp, a high pressure sodium lamp, a metal halide lamp, a BLB lamp and the like is preferred. On the other hand, when the photocatalytic oxide is tin oxide, light from a bactericidal lamp, a BLB lamp and the like is preferred. The irradiation intensity of light applied may be suitably determined by taking into consideration the composition of the member, applications of the member and the like. In order to highly hydrophilify the hydrophilic portion of the surface of the member and maintain the highly hydrophilified state, the irradiation intensity of the excitation light is preferably not less than 0.001 mW/cm², more preferably not less than 0.01 mW/cm², most preferably not less than 0.1 mW/cm².

In the present embodiment, the silicone resin is represented by the following average composition formula (I)

RₚsiO_{(4-p)/2} (I)

wherein
R represents a group selected from the group consisting of a hydrogen atom and one or more organic groups;
X represents an alkoxy group or a halogen atom; and
p is a number satisfying 0 < p < 2.

In this case, the organic group represented by R is an alkyl (more preferably an unsubstituted alkyl having 1 to 18 carbon atoms, most preferably an alkyl having 3 to 18 carbon atoms) or an aryl (preferably phenyl).

Specific examples of preferred silicone resins include hydrolyzates and hydration polycondensates of methyltrimethoxysilane, methyltriethoxysilane, methyltrichlorosilane, methyltribromosilane, methyltriisopropoxysilane, methyl-tri-t-butoxysilane, ethyltrimethoxysilane, ethyltriethoxysilane, ethyltrichlorosilane, ethyltribromosilane, ethyltriisopropoxysilane, ethyl-tri-t-butoxysilane, n-propyltrimethoxysilane, n-propyltriethoxysilane, n-propyltrichlorosilane, n-propyltribromosilane, n-propyltriisopropoxysilane, n-propyl-tri-t-butoxysilane, n-hexyltrimethoxysilane, n-hexyltriethoxysilane, n-hexytrichlorosilane, n-hexyltribromosilane, n-hexyltriisopropoxysilane, n-hexyl-tri-t-butoxysilane, n-decyltrimethoxysilane, n-decyltriethoxysilane, n-decyltrichlorosilane, n-decyltribromosilane, n-decyltriisopropoxysilane, n-decyl-tri-t-butoxysilane, n-octatrimethoxysilane, n-octatriethoxysilane, n-octatrichlorosilane, n-octatribromosilane, n-octatriisopropoxysilane, n-octa-tri-t-butoxysilane, phenyltrimethoxysilane, phenyltriethoxysilane, phenyltrichlorosilane, phenyltribromosilane, phenyltriisopropoxysilane, phenyl-t-butoxysilane, dimethyldichlorosilane, dimethyldibromosilane, dimethyldimethoxysilane, dimethyldiethoxysilane, diphenyldichlorosilane, diphenyldibromosilane, diphenyldimethoxysilane, diphenyldiethoxysilane, phenylmethyldichlorosilane, phenylmethyldibromosilane, phenylmethyldimethoxysilane, phenylmethyldiethoxysilane, vinyltrichlorosilane, vinyltribromosilane, vinyltrimethoxysilane, vinyltriethoxysilane, vinyltriisopropoxysilane, vinyl-tri-t-butoxysilane, trifluoropropyltrichlorosilane, trifluoropropyltribromosilane, trifluoropropyltrimethoxysilane, trifluoropropyltriethoxysilane, trifluoropropyltriisopropoxysilane, trifluoropropyl-tri-t-butoxysilane, γ-glycidoxypropylmethyldimethoxysilane, γ-glycidoxypropylmethyldiethoxysilane, γ-glycidoxypropyltrimethoxysilane, γ-glycidoxypropyltriethoxysilane, γ-glycidoxypropyltriisopropoxysilane, γ-glycidoxypropyl-tri-t-butoxysilane, γ-methacryloxypropylmethyldimethoxysilane, γ-methacryloxypropylmethyldiethoxysilane, γ-methacryloxypropyltrimethoxysilane, γ-methacryloxypropyltriethoxysilane, γ-methacryloxypropyltriisopropoxysilane, γ-methacryloxypropyl-tri-t-butoxysilane, γ-aminopropylmethyldimethoxysilane, γ-aminopropylmethyldiethoxysilane, γ-aminopropyltrimethoxysilane, γ-aminopropyltriethoxysilane, γ-aminopropyltriisopropoxysilane, γ-aminopropyl-tri-t-butoxysilane, γ-mercaptopropylmethyldimethoxysilane, γ-mercaptopropylmethyldiethoxysilane, γ-mercaptopropyltrimethoxysilane, γ-mercaptopropyltriethoxysilane, γ-mercaptopropyltriisopropoxysilane, γ-mercaptopropyl-tri-t-butoxysilane, β-(3,4-epoxycyclohexyl)ethyltrimethoxysilane, and β-(3,4-epoxycyclohexyl)ethyltriethoxysilane.

In the present embodiment, silica is preferably amorphous silica.

Further, in the present embodiment, preferred hydrophobic fluororesins usable herein include, for example, polymers containing a fluoro group, such as polytetrafluoroethylene, polyvinylidene fluoride, polyvinyl fluoride, polychlorotrifluoroethylene, tetrafluoroethylene/hexafluoropropylene copolymer, ethylene/tetrafluoroethylene copolymer, ethylene/chlorotrifluoroethylene copolymer, tetrafluoroethylene/perfluoroalkyl vinyl ether copolymer, perfluorocyclo polymer, vinyl ether/fluoroolefin copolymer, vinyl ester/fluoroolefin copolymer, tetrafluoroethylene/vinyl ethercopolymer, chlorotrifluoroethylene/vinyl ether copolymer, urethane-crosslinked tetrafluoroethylene, epoxy-crosslinked tetrafluoroethylene, acryl-crosslinked tetrafluoroethylene, and melamine-crosslinked tetrafluoroethylene. In the present invention, the hydrophobicity of the hydrophobic fluororesin may be suitably determined so that the effect of the present invention can be attained. For example, the hydrophobicity is preferably not less than 80°, more preferably 120° , in terms of the contact angle of the fluororesin with water. Among the fluororesins, tetrafluoroethylene is preferred from the viewpoint of high water repellency and persistence of the high water repellency.

Substrates used in the present invention is not particularly limited, and preferred examples thereof include metals, ceramics, glasses, plastics, woods, stones, cements, concretes, fibers, woven fabrics, and combinations of the above materials and laminates of the above materials. The substrate may be determined by taking into consideration applications of the member.

The content of the hydrophobic fluororesin in the surface layer according to the present embodiment may be suitably determined by taking into consideration the composition of the surface layer, applications of the member and the like. However, the content of the hydrophobic fluororesin in the surface layer is preferably about 20 to 60% by weight, more preferably about 25 to 50% by weight.

The content of the photocatalytic oxide in the surface layer is also not particularly limited. For example, the content of the photocatalytic oxide in the surface layer is preferably about 10 to 80% by weight, more preferably about 20 to 50% by weight.

According to a preferred embodiment of the present invention, the thickness of the surface layer may be suitably determined by taking into consideration the composition of the surface layer, applications of the member and the like. For example, when a transparent surface layer is contemplated, the thickness is preferably not more than about 0.4 µm. This can prevent haze development derived from irregular reflection of light, rendering the surface layer substantially transparent. The thickness of the surface layer is more preferably not more than about 0.2 µm from the viewpoint of effectively preventing the color development of the surface layer derived from the interference of light. The smaller the thickness of the surface layer, the better the transparency of the surface layer. However, it is apparent that a given thickness is preferred from the viewpoint of abrasion resistance.

Further, like the embodiment shown in Fig. 1, when the water-repellent fluororesin and the photocatalytic oxide are utilized as a particle, the particle diameter thereof may be suitably determined. For the water-repellent fluororesin, the primary diameter is preferably about 10 nm to 10 µm, more preferably about 100 nm to 1 µm. For the photocatalytic oxide, the crystallite diameter is preferably about 1 to 100 nm, more preferably about 5 to 20 nm.

Not only smoke and soot floating in the air but also water droplets, snow, and, in addition, biopolymers, such as protein, organism, and microorganisms are less likely to be deposited on the member according to the first aspect of the present invention. Therefore, the member according to the present invention can be used in the following applications. Specifically, examples of applications include building materials, exterior of buidlings, interior of buildings, sashes, windowpanes, structural members, plates, exterior and coating of vehicles, exterior of machineries and articles, dustproof covers and coatings, reflector plates for traffic signs, various display devices, advertising towers or poster columns, noise barriers for roads, noise barriers for rail roads, decorative plates for roads, light source covers for signals, display panels for outdoors, bridges, exterior and coating of guard rails, interior and coating of tunnels, lighting apparatuses for interior of tunnels, insulators, covers for solar cells, covers for solar energy collectors of solar water heaters, vinyl plastic hothouses, covers for lighting of vehicles, mirrors for roads, mirrors for vehicles, instrument covers and instrument panels for two-wheeled vehicles, glass lenses, plastic lenses, helmet shields, windowpanes for housings, automobiles and railway vehicles, showcases, showcase for retention of heat, film structures, fins for heat exchangers, glass surfaces for various places, window shades (blinds), tire wheels, roof materials, antennas, power lines, households, stools, bath tubs, wash basins, lighting equipment, covers for lighting, kitchenwares, tablewares, cabinets for tablewares, dishwashers, dishdryers, sinks, cooking ranges, kitchen hoods, ventilation fans, anti-thrombotenic material, anti-protein-depositable materials, bottoms of ships, and films for application on the above articles.

According to a preferred embodiment of the present invention, the proportion of the hydrophobic portion and the hydrophilic portion present on the outermost surface may be suitably determined by taking into consideration the applications of the member.

Specifically, the member, wherein a hydrophobic portion derived from the water-repellent fluororesin and a hydrophilic portion derived from the silicone or silica each are present in at least one place per 10 to 100 nm² on the outermost surface of the surface layer, has such a property that biopolymers are less likely to be deposited thereon. Therefore, this member can be applied to anti-thrombotenic materials, anti-protein-depositable materials, anti-lipid-adhesion materials and the like. More specifically, the member may be used as contact lenses and disposable medical instruments, such as urinary catheters, percutaneous devices, various artificial organs, blood bags, urine-collecting bags, lung drainages, and tubes for connection between the above members.

On the other hand, the member, wherein a hydrophobic portion derived from the water-repellent fluororesin and a hydrophilic portion derived from the silicone or silica each are present in at least one place per 10 nm² to 1 µm² on the outermost surface of the surface layer, has such a property that organisms are less likely to be deposited thereon. Therefore, this member may be used as materials for the bottom of ships, outer wall materials, bathroom materials, bathtub materials, materials for water tanks for the appreciation, and surface materials (for example, design tiles) for equipment utilizing circulating water (for example, artificial waterfalls in parks) in its area which comes into contact with the circulating water.

Further, the member, wherein a hydrophobic portion derived from the water-repellent fluororesin and a hydrophilic portion derived from the silicone or silica each are present in at least one place per 0.1 mm² on the outermost surface of the surface layer, has such a property that a stain derived from suspended smoke and soot in the air is less likely to be deposited thereon, or the stain, even when once deposited thereon, can be easily removed. Therefore, this member may be used as building materials for outdoors, covers for solar batteries, covers for heat collectors for solar water heaters, handrails, internal walls for tunnels, sound insulating walls, sound barriers, guard fences, road structures, such as decorative plates for roads, window shades (blinds), insulators, wheels, and bodies for vehicles, such as automobiles.

In the member according to the first aspect of the present invention, the contact angle of the surface layer with water is not basically limited so far as the member has an antifouling activity. In general, however, the apparent contact angle of the member with water is about 10 to 120° .

Photocatalytic oxides are known to have antifouling, antimicrobial, and deodorant activities based on the oxidative degradation action. It is believed that, also in the member according to the present invention, this action maintained. It is believed that the oxidative degradation action of the photocatalyst is more preferably exhibited in the case where the hydrophobic portion derived from the water-repellent fluororesin and the hydrophilic portion derived from the silicone or silica each are present in at least one place per 0.1 mm² on the outermost surface of the surface layer.

Further, the member according to the present invention can effectively prevent the growth of water droplets deposited thereon, and water droplets deposited on the member are rolled over the surface by the action of slight force and easily removed from the surface. Further, ice and snow are not easily deposited on the surface of the member according to the present invention. That is, the member according to the present invention has inhibitory activity against the growth of water droplets, deposition of water droplets, and deposition of ice and snow.

Because the member of the present invention has inhibitory activity against the growth of water droplets, application of the member to glasses, mirrors and the like can effectively prevent the growth of water droplets to such an extent that water droplets scatter light. Specifically, the member can be applied for preventing fogging or ensuring the visibility of glasses, mirrors, lenses, prisms and the like. More specifically, the member can be used as windowpanes for buildings, windowpanes for vehicles, windshields for vehicles, mirrors for vehicles, road mirrors, lavatory mirrors, covers for instrument boards, lenses for spectacles, helmet shields, goggles, and showcases for retention of heat. It is believed that the above action is more preferably exhibited in the case where the hydrophobic portion derived from the water-repellent fluororesin and the hydrophilic portion derived from the silicone or silica each are present in at least one place per 0.2 µm² on the outermost surface of the surface layer.

Further, since the member according to the present invention has inhibitory activity against the deposition of water droplets and against the deposition of ice and snow, the member according to the present invention can be applied in applications, such as the prevention of a lowering in efficiency of a heat exchanger due to the deposition of water droplets between fins in an aluminum fin of the heat exchanger, the prevention of a lowering in the insulating property of a bath surface due to the deposition of water (salt) onto the surface of an insulator, the prevention of a deterioration in design due to the deposition of water droplets onto an apron portion of a bathtub, the prevention of accumulation of ice and snow on a roof, the prevention of the formation of an icicle, the prevention of accumulation of ice and snow on an antenna, the prevention of communication troubles, the prevention of accumulation of ice and snow on a power line, and the prevention of conical discharge. More specifically, the member can be used as fins for heat exchangers, insulators, bathtubs, counters for lavatories, kitchen counters, roof materials, roof gutters, antennas, and power lines. According to a preferred embodiment of the present invention, it is believed that the inhibitory activity against the deposition of water droplets and the inhibitory activity against the deposition of ice and snow are more preferably exhibited in the case where the hydrophobic portion derived from the water-repellent fluororesin and the hydrophilic portion derived from the silicone or silica each are present in at least one place per mm² on the outermost surface of the surface layer.

Further, according to a preferred embodiment of the present invention, a metal, such as silver, copper, or zinc, is added to the surface layer. The surface layer with the above metal added thereto can kill bacteria and mold deposited on the surface thereof even in a dark place and hence can further improve the antifouling property.

According to another preferred embodiment of the present invention, a platinum group metal, such as platinum, palladium, ruthenium, rhodium, iridium, or osmium, may be added to the surface layer. The surface layer with the above metal added thereto can enhance the redox activity of the photocatalyst and can improve the degradability of organic stains and the degradability of harmful gases and bad smells.

### Production of antifouling member according to first aspect of invention and composition therefor

The member according to the first aspect of the present invention may be basically produced by coating a composition for a surface layer on the surface of a substrate and forming the surface layer.

According to a preferred embodiment of the present invention, the composition for the above production comprises:
(a) a silicone resin coating precursor capable of forming a silicone resin coating or a silica coating precursor capable of forming a silica coating;
(b) a photocatalytic oxide dispersed in the coating precursor (a); and
(c) a water-repellent fluororesin dispersed in the coating precursor (a).

In this case, preferred examples of silicone resin coating precursors include siloxanes represented by the average composition formula

RₚSiX_{q}O_{(4-p-q)/2}

wherein
R is as defined above in connection with the formula (I);
X represents an alkoxy group or a halogen atom; and
p is a number satisfying 0 < p < 2 and q is a number satisfying 0 < q < 4.

Another preferred examples of silicone resin coating precursors include hydrolyzable silane derivatives represented by the general formula

RₚSiX₄₋ₚ

wherein R is as defined above in connection with the formula (I);
X represents an alkoxy group or a halogen atom; and
p is 1 or 2.

Specific examples of preferred hydrolyzable, silane derivatives include methyltrimethoxysilane, methyltriethoxysilane, methyltripropoxysilane, methyltributoxysilane, ethyltrimethoxysilane, ethyltriethoxysilane, ethyltripropoxysilane, ethyltributoxysilane, phenyltrimethoxysilen, phenyltriethoxysilane, phenyltripropoxysilane, phenyltributoxysilane, dimethyldimethoxysilane, dimethyldiethoxysilane, dimethyldipropoxysilane, dimethyldibutoxysilane, diethyldimethoxysilane, diethyldiethoxysilane, diethyldipropoxysilane, diethyldibutoxysilane, phenylmethyldimethoxysilane, phenylmethyldiethoxysilane, phenylmethyldibutoxysilane, n-propyltrimethoxysilane, n-propyltriethoxysilane, n-propyltripropoxysilane, n-propyltributoxysilane, γ-glycosidoxypropyltrimethoxysilane, and γ-acryloxypropyltrimethoxysilane.

The siloxane may be prepared by partial hydrolysis and dehydration polycondensation of the hydrolyzable silane derivative, or by dehydration polycondensation of a partial hydrolyzate of the hydrolyzable silane derivative with a partial hydrolyzate of tetramethoxysilane, tetraethoxysilane, tetrapropoxysilane, tetrabutoxysilane, diethoxydimethoxysilane or the like.

Preferred examples of silica coating precursors include silicates represented by the average composition formula

SiX_{q}O_{(4-q)/2}

wherein X represents an alkoxy group or a halogen atom and q is a number satisfying 0 < q < 4.

Another preferred examples of silica coating precursors include tetrafunctional hydrolyzable silane derivatives represented by the general formula

SiX₄

wherein
X represents an alkoxy group or a halogen atom.

Specific examples of preferred tetrafunctional hydrolyzable silane derivatives include tetramethoxysilane, tetraethoxysilane, tetrapropoxysilane, tetrabutoxysilane, and diethoxydimethoxysilane.

Specific examples of preferred silicates include partial hydrolyzates and dehydration polycondensates of the above tetrafunctional hydrolyzable silane derivatives.

The composition for the surface layer is preferably a solution or dispersion of the above components (a), (b), and (c) in a solvent. Preferred solvents include water, ethanol, and propanol.

The composition for the surface layer may further contain additives. Examples of additives usable herein include: catalysts for accelerating the hydrolysis of the silicone precursor, for example, hydrochloric acid, nitric acid, acetic acid, and maleic acid; catalysts for curing the silicone precursor, for example, basic compounds, such as tributylamine and hexylamine, and acidic compounds, such as aluminum triisopropoxide and tetraisopropyl titanate; surfactants for improving the dispersibility of a coating liquid, such as silane coupling agents; levelling agents, such as diacetone alcohol and cellosolve; and spraying agents, such as dimethyl ether.

The member according to the first aspect of the present invention using this composition may be produced by coating the above composition on a substrate and subjecting the coated substrate to such a reaction that the silicone resin coating precursor or silica coating precursor in the composition is converted to a silicone coating or a silica coating.

Suitable coating methods usable for coating the composition onto the substrate include spray coating, dip coating, flow coating, spin coating, roll coating, brush coating, and sponge coating. The reaction by which the silicone resin coating precursor or the silica coating precursor is converted to the silicone coating or the silica coating may be suitably determined by taking into consideration properties of the precursor utilized. For example, the precursor may be polymerized by heat treatment, standing at room temperature, ultraviolet irradiation, wetting treatment or the like. The above method according to the present invention is advantageous in that selection of this reaction realizes the production of the member under relatively mild reaction conditions. More specifically, the production can be carried out, for example, by simply allowing the coated substrate to stand at room temperature. Further, also in the case of ultraviolet irradiation, the production can be carried out substantially at room temperature.

Further, according to the present invention, provision of the above composition has lead to provision of a method for imparting an antifouling property to a desired surface, the method comprising the steps of: coating the above composition onto a surface to which an antifouling property is to be imparted; and subjecting the coating to such a reaction that the silicone resin coating precursor or the silica coating precursor in the composition is converted to a silicone coating or a silica coating.

### Antifouling member according to second embodiment of present invention

The member according to the second aspect of the present invention comprises a substrate and a surface layer provided on the substrate, the surface layer comprising a hydrophobic resin and a photocatalytic oxide. The hydrophobic resin and the photocatalytic oxide are present in a microscopically dispersed and exposed state on the outermost surface of the surface layer.

As with the member according to the first aspect of the present invention, the member according to the second aspect of the present invention has, on its outermost surface, a hydrophobic portion, and a hydrophilic portion induced by a photocatalyst. As a result, both hydrophilic deposits and hydrophobic deposits cannot be deposited on the surface of the member, and, even when deposited on the surface of the member, are unstable and hence are easily removed, permitting the surface of the member to be kept clean. Therefore, the member according to the second aspect of the present invention also may be basically used in the same applications as the member according to the first aspect of the present invention.

According to a preferred embodiment of the present invention, the surface layer of the member of the present invention further comprises an inorganic oxide. This inorganic oxide, together with the hydrophobic resin and the photocatalytic oxide, is present in a microscopically dispersed and exposed state on the outermost surface of the surface layer. Further, the inorganic oxide is hydrophilified by photocatalytic action created in response to photoexcitation of the photocatalytic oxide. This means that the hydrophilic portion induced by the photocatalyst is further provided in the surface layer by the inorganic oxide.

A first preferred embodiment of the second aspect of the present invention is shown in Fig. 3. The member 21 shown in this drawing comprises a surface layer 23 provided on a substrate 22. The surface layer 23 comprises a hydrophobic resin layer 24 and a photocatalytic oxide 25 dispersed in this layer 24. The photocatalytic oxide 25 is present in an exposed state on the outermost surface of the layer 24. In the embodiment shown in this drawing, the photocatalytic oxide is provided as a particle.

In the embodiment shown in Fig. 3, the surface layer 23 may contain an inorganic oxide, and this embodiment is shown in Fig. 4. The embodiment shown in Fig. 4, a particulate inorganic oxide 26, together with the photocatalytic oxide 25, is dispersed in the hydrophobic resin layer 24. The inorganic oxide 26 also is present in an exposed state on the outermost surface of the layer 23.

A second preferred embodiment of the second aspect of the present invention is as shown in Fig. 5. The member 21 shown in this drawing comprises a layer 24, formed of a photocatalytic oxide, and a layer 28, formed of a hydrophobic resin, provided on the layer 24. In this case, the layer 28 formed of a hydrophobic resin is laminated onto a part of the layer 24. Consequently, the hydrophobic resin and the photocatalytic oxide are present in a microscopically dispersed and exposed state on the outermost surface of the surface layer 23.

Further, in the embodiment shown in Fig. 5, the layer 24 formed of a photocatalytic oxide may further contain an inorganic oxide. This embodiment is shown in Fig. 6. In the embodiment shown in Fig. 6, a particulate inorganic oxide 29 is dispersed in the layer formed of a photocatalytic inorganic oxide. This inorganic oxide 29 also is present in an exposed state on the outermost surface of the layer 23.

In the second aspect of the present invention, photocatalytic oxides include those as described above. Further, light sources and irradiation intensity of light may be substantially the same as those described above in connection with the first aspect of the present invention.

In the second aspect of the present invention, hydrophobic resins include fluororesins, acrylic resins, urethane resins, polyester resins, vinyl resins, PET, and silicone resins, for example, acrylic silicone, and rubbers.

According to a preferred embodiment of the present invention, a fluororesin is utilized as the hydrophobic resin from the viewpoint of lightfastness. Preferred fluororesins include polymers containing a fluoro group, such as polytetrafluoroethylene, polyvinylidene fluoride, polyvinyl fluoride, polychlorotrifluoroethylene, tetrafluoroethylene/hexafluoropropylene copolymer, ethylene/tetrafluoroethylene copolymer, ethylene/chlorotrifluoroethylenecopolymer, tetrafluoroethylene/perfluoroalkyl vinyl ether copolymer, perfluorocyclo polymer, vinyl ether/fluoroolefin copolymer, vinyl ester/fluoroolefin copolymer, tetrafluoroethylene/vinyl ether copolymer, chlorotrifluoroethylene/vinyl ether copolymer, urethane-crosslinked tetrafluoroethylene, epoxy-crosslinked tetrafluoroethylene, acryl-crosslinked tetrafluoroethylene, and melamine-crosslinked tetrafluoroethylene.

According to another preferred embodiment of the present invention, a silicone resin is used as the hydrophobic resin. Specific examples of preferred silicone resins include hydrolyzates and hydration polycondensates of methyltrimethoxysilane, methyltriethoxysilane, methyltrichlorosilane, methyltribromosilane, methyltriisopropoxysilane, methyl-tri-t-butoxysilane, ethyltrimethoxysilane, ethyltriethoxysilane, ethyltrichlorosilane, ethyltribromosilane, ethyltriisopropoxysilane, ethyl-tri-t-butoxysilane, n-propyltrimethoxysilane, n-propyltriethoxysilane, n-propyltrichlorosilane, n-propyltribromosilane, n-propyltriisopropoxysilane, n-propyl-tri-t-butoxysilane, n-hexyltrimethoxysilane, n-hexyltriethoxysilane, n-hexytrichlorosilane, n-hexyltribromosilane, n-hexyltriisopropoxysilane, n-hexyl-tri-t-butoxysilane, n-decyltrimethoxysilane, n-decyltriethoxysilane, n-decyltrichlorosilane, n-decyltribromosilane, n-decyltriisopropoxysilane, n-decyl-tri-t-butoxysilane, n-octatrimethoxysilane, n-octatriethoxysilane, n-octatrichlorosilane, n-octatribromosilane, n-octatriisopropoxysilane, n-octa-tri-t-butoxysilane, phenyltrimethoxysilane, phenyltriethoxysilane, phenyltrichlorosilane, phenyltribromosilane, phenyltriisopropoxysilane, phenyl-t-butoxysilane, dimethyldichlorosilane, dimethyldibromosilane, dimethyldimethoxysilane, dimethyldiethoxysilane, diphenyldichlorosilane, diphenyldibromosilane, diphenyldimethoxysilane, diphenyldiethoxysilane, phenylmethyldichlorosilane, phenylmethyldibromosilane, phenylmethyldimethoxysilane, phenylmethyldiethoxysilane, vinyltrichlorosilane, vinyltribromosilane, vinyltrimethoxysilane, vinyltriethoxysilane, vinyltriisopropoxysilane, vinyl-tri-t-butoxysilane, trifluoropropyltrichlorosilane, trifluoropropyltribromosilane, trifluoropropyltrimethoxysilane, trifluoropropyltriethoxysilane, trifluoropropyltriisopropoxysilane, trifluoropropyl-tri-t-butoxysilane, γ-glycidoxypropylmethyldimethoxysilane, γ-glycidoxypropylmethyldiethoxysilane, γ-glycidoxypropyltrimethoxysilane, γ - glycidoxypropyltriethoxysilane, γ - glycidoxypropyltriisopropoxysilane, γ-glycidoxypropyl-tri-t-butoxysilane, γ-methacryloxypropylmethyldimethoxysilane, γ-methacryloxypropylmethyldiethoxysilane, γ-methacryloxypropyltrimethoxysilane, γ-methacryloxypropyltriethoxysilane, γ-methacryloxypropyltriisopropoxysilane, γ-methacryloxypropyl-tri-t-butoxysilane, γ-aminopropylmethyldimethoxysilane, γ-aminopropylmethyldiethoxysilane, γ-aminopropyltrimethoxysilane, γ-aminopropyltriethoxysilane, γ-aminopropyltriisopropoxysilane, γ-aminopropyl-tri-t-butoxysilane, γ-mercaptopropylmethyldimethoxysilane, γ-mercaptopropylmethyldiethoxysilane, γ-mercaptopropyltrimethoxysilane, γ-mercaptopropyltriethoxysilane, γ-mercaptopropyltriisopropoxysilane, γ-mercaptopropyl-tri-t-butoxysilane, β-(3,4-epoxycyclohexyl)ethyltrimethoxysilane, and β-(3,4-epoxycyclohexyl)ethyltriethoxysilane. In the first aspect of the present invention, these silicone resins are used as a material for imparting a hydrophilic portion. Specifically, in the first aspect of the present invention, these silicone resins are hydrophilified by photocatalytic action of the photocatalytic oxide. It is considered that, also in the second aspect of the present invention, the silicone resin present around the photocatalytic oxide is hydrophilified. In the second aspect of the present invention, however, the silicone resin, as compared with the photocatalytic oxide, is present in an amount large enough to serve substantially as a hydrophobic resin. Therefore, there is no discrepancy between the first and second aspects of the present invention.

In the present invention, the level of the hydrophobicity of the hydrophobic resin may be suitably determined so far as the effect of the present invention is attained. For example, the level of the hydrophobicity is preferably not less than 60° , more preferably not less than 120° , in terms of the contact angle of the hydrophobic resin with water.

Inorganic oxides, which are preferably added in the second aspect of the present invention, are not particularly limited so far as they can be hydrophilified by photocatalytic action of the photocatalytic oxide. Examples thereof include silica, alumina, water glass, silicate, aluminosilicate, zirconia, ceria, tin oxide, calcia, magnesia, amorphous titania and other metal oxides. Among them, silica or alumina is particularly preferred from the viewpoint of retention of the hydrophilicity of the hydrophilic portion in a dark place.

The substrate also is not particularly limited. As with the substrate used in the first aspect of the present invention, the substrate may be suitably determined by taking the applications of the member into consideration. Specific examples of substrates usable herein include those described above in connection with the first aspect of the present invention.

The content of the photocatalytic oxide in the surface layer of the member according to the second aspect of the present invention is not particularly limited. For example, the content of the photocatalytic oxide in the surface layer is preferably about 10 to 80% by weight, more preferably about 20 to 50% by weight.

According to a preferred embodiment of the present invention, the thickness of the surface layer may be suitably determined by taking into consideration the composition of the surface layer, applications of the member and the like. The preferred range of the layer thickness may also be the same as that described above in connection with the first aspect of the present invention.

Like the embodiment shown in the drawing, the photocatalytic oxide may be utilized as a particle. Although the particle diameter (crystallite diameter) may be suitably determined, the particle diameter is preferably about 1 to 100 nm, more preferably about 5 to 20 nm.

Also when the inorganic oxide is used as a particle, the particle diameter thereof may be suitably determined. However, the particle diameter is preferably about 1 nm to 1 µm, more preferably about 5 to 100 nm.

For the embodiments shown in the drawings, preferred conditions are as follows.

At the outset, in the embodiment shown in Fig. 3, the thickness of the hydrophobic resin layer 24 is preferably about 10 nm to 10 µm, more preferably about 100 nm to 1 µm. The content of the photocatalytic oxide particle in the layer 24 is preferably about 10 to 80% by weight, more preferably about 20 to 50% by weight. In the embodiment shown in Fig. 4, the content of the photocatalytic oxide particle is preferably about 1 to 80% by weight, more preferably about 20 to 50% by weight, while the content of the inorganic oxide particle is preferably about 1 to 70% by weight, more preferably about 5 to 55% by weight.

Further, in the embodiment shown in Fig. 5, the thickness of the photocatalytic oxide layer 27 is preferably about 10 nm to 1 µm, more preferably about 50 to 400 nm. The thickness of the hydrophobic resin layer overlying the photocatalytic oxide layer 27 is preferably about 1 to 100 nm, more preferably about 5 to 50 nm. In the embodiment shown in Fig. 6, the content of the photocatalytic oxide particle is preferably about 10 to 99% by weight, more preferably about 50 to 99% by weight, while the content of the inorganic oxide particle is preferably about 50 to 90% by weight, more preferably about 5 to 50% by weight.

As described above, basically, the member according to the second aspect of the present invention also may be used in the same applications as the member according to the first aspect of the present invention. Further, as with the first aspect of the present invention, in the second aspect of the present invention, the proportion of the hydrophobic portion and the hydrophilic portion present on the surface layer also may be suitably determined by taking applications of the member into consideration. The proportion of the hydrophobic portion and the hydrophilic portion and specific examples of applications of the member may be the same as those described above in connection with the first aspect of the present invention.

Specifically, the member, wherein the hydrophobic portion and the hydrophilic portion each are present in at least one place per 10 to 100 nm² on the outermost surface of the surface layer, has such a property that biopolymers are less likely to be deposited thereon. Therefore, this member can be applied to anti-thrombotenic materials, anti-protein-depositable materials, anti-lipid-adhesion materials and the like. More specifically, the member may be used as contact lenses and disposable medical instruments, such as urinary catheters, percutaneous devices, various artificial organs, blood bags, urine-collecting bags, lung drainages, and tubes for connection between the above members.

On the other hand, the member, wherein the hydrophobic portion and the hydrophilic portion each are present in at least one place per 10 nm² to 1 µm² on the outermost surface of the surface layer, has such a property that organisms are less likely to be deposited thereon. Therefore, this member may be used as materials for the bottom of ships, outer wall materials, bathroom materials, bathtub materials, materials for water tanks for the appreciation, and surface materials (for example, design tiles) for equipment utilizing circulating water (for example, artificial waterfalls in parks) in its area which comes into contact with the circulating water.

Further, the member, wherein the hydrophobic portion and the hydrophilic portion each are present in at least one place per mm² on the outermost surface of the surface layer, has such a property that a stain derived from suspended smoke and soot in the air is less likely to be deposited thereon, or the stain, even when once deposited thereon, can be easily removed. Therefore, this member may be used as building materials for outdoors, covers for solar batteries, covers for heat collectors for solar water heaters, handrails, internal walls for tunnels, sound insulating walls, sound barriers, guard fences, road structures, such as decorative plates for roads, window shades (blinds), insulators, wheels, and bodies for vehicles, such as automobiles.

In the member according to the second aspect of the present invention, as with the member according to the first aspect of the present invention, the contact angle of the surface layer with water is not basically limited so far as the member has an antifouling activity. In general, however, the apparent contact angle of the member with water is about 10 to 120° .

Photocatalytic oxides are known to have antifouling, antimicrobial, and deodorant activities based on the oxidative degradation action. It is believed that, also in the member according to the present invention, this action is maintained. It is believed that the oxidative degradation action of the photocatalyst is more preferably exhibited in the case where the hydrophobic portion derived from the water-repellent fluororesin and the hydrophilic portion derived from the silicone or silica each are present in at least one place per 0.1 mm² on the outermost surface of the surface layer.

Further, the member according to the present invention can effectively prevent the growth of water droplets deposited thereon, and water droplets deposited on the member are rolled over the surface by the action of slight force and easily removed from the surface. Further, ice and snow are not easily deposited on the surface of the member according to the present invention. That is, the member according to the present invention has inhibitory activity against the growth of water droplets, deposition of water droplets, and deposition of ice and snow.

Because the member of the present invention has inhibitory activity against the growth of water droplets, application of the member to glasses, mirrors and the like can effectively prevent the growth of water droplets to such an extent that water droplets scatter light. More specifically, the member can be applied for preventing fogging or ensuring the visibility of glasses, mirrors, lenses, prisms and the like. More specifically, the member can be used as windowpanes for buildings, windowpanes for vehicles, windshields for vehicles, mirrors for vehicles, road mirrors, lavatory mirrors, covers for instrument boards, lenses for spectacles, helmet shields, goggles, and showcases for retention of heat. It is believed that the above action is more preferably exhibited in the case where the hydrophobic portion derived from the water-repellent fluororesin and the hydrophilic portion derived from the silicone or silica each are present in at least one place per 0.2 µm² on the outermost surface of the surface layer.

Further, since the member according to the present invention has inhibitory activity against the deposition of water droplets and against the deposition of ice and snow, the member according to the present invention can be used in applications, such as the prevention of a lowering in efficiency of a heat exchanger due to the deposition of water droplets between fins in an aluminum fin of the heat exchanger, the prevention of a lowering in the insulating property of a bath surface due to the deposition of water (salt) onto the surface of an insulator, the prevention of a deterioration in design due to the deposition of water droplets onto an apron portion of a bathtub, the prevention of accumulation of ice and snow on a roof, the prevention of the formation of an icicle, the prevention of accumulation of ice and snow on an antenna, the prevention of communication troubles, the prevention of accumulation of ice and snow on a power line, and the prevention of conical discharge. More specifically, the member can be used as fins for heat exchangers, insulators, bathtubs, counters for lavatories, kitchen counters, roof materials, roof gutters, antennas, and power lines. According to a preferred embodiment of the present invention, it is believed that the inhibitory activity against the deposition of water droplets and the inhibitory activity against the deposition of ice and snow are more preferably exhibited in the case where the hydrophobic portion derived from the water-repellent fluororesin and the hydrophilic portion derived from the silicone or silica each are present in at least one place per mm² on the outermost surface of the surface layer.

Further, according to the second aspect of the present invention, as with the first aspect of the present invention, preferably, a metal, such as silver, copper, or zinc, is added to the surface layer. The surface layer with the above metal added thereto can kill bacteria and mold deposited on the surface thereof even in a dark place and hence can further improve the antifouling property. Further, a platinum group metal, such as platinum, palladium, ruthenium, rhodium, iridium, or osmium, may be added to the surface layer. The surface layer with the above metal added thereto can enhance the redox activity of the photocatalyst and can improve the degradability of organic stains and the degradability of harmful gases and bad smells.

### Production of antifouling member according to second aspect

Preferably, the member according to the second aspect of the present invention is produced as follows.

The member having a construction shown in Fig. 3 or 4 may be produced by coating a substrate with a layer comprising a hydrophobic resin containing a photocatalytic oxide and optionally an inorganic oxide dispersed therein. More specifically, a hydrophobic resin is dissolved in a solvent capable of dissolving the hydrophobic resin, and a photocatalytic oxide and optionally an inorganic oxide are dispersed in the solution to prepare a coating liquid which is then coated on a substrate. Thereafter, the solvent is removed by evaporation to dry the coating and to form a resin layer. Thus, a surface layer is formed on the substrate.

Basically, the photocatalytic oxide and the inorganic oxide are present in an exposed state on the outermost surface of the surface layer, the degree of the exposure of the photocatalytic oxide and the inorganic oxide on the outermost surface of the surface layer being basically proportional to the concentration of the photocatalytic oxide and the inorganic oxide in the coating liquid. In some cases, however, even when the concentration of these materials in the coating liquid is increased, it is difficult to expose the photocatalytic oxide and the inorganic oxide on the outermost surface. In this case, after the formation of the resin layer, the surface of the resin layer may be removed to expose a desired amount of the photocatalytic oxide and the inorganic oxide, present within the layer, on the surface thereof.

Alternatively, the members having constructions as shown in Figs. 3 and 4 may be produced as follows. Specifically, at the outset, a hydrophobic resin precursor composition capable of forming a hydrophobic resin layer is coated on a substrate. An example of the precursor composition is a solution of a hydrophobic resin in a solvent capable of dissolving the hydrophobic resin. On the other hand, the surface of the inorganic oxide and the surface of the photocatalytic oxide are hydrophobified with a hydrophobifying agent. Specific examples of hydrophobifying agents include, for example, silane coupling agents. The hydrophobified photocatalytic oxide and inorganic oxide are coated on the coating of the hydrophobic resin precursor composition formed on the substrate. The surface of the photocatalytic oxide and the surface of the inorganic oxide are now in a hydrophobified state, and, hence, the photocatalytic oxide and the inorganic oxide have good affinity for and can be evenly present on the hydrophobic resin coating. Thereafter, the hydrophobifying agent is removed from the surface of the photocatalytic oxide and the inorganic oxide. The hydrophobifying agent may be removed by a suitable method determined depending upon the type of the hydrophobifying agent. For example, a silane coupling agent can be easily removed by ultraviolet irradiation or etching. The assembly is then cured or dried to induce such a reaction that the precursor composition is converted to a hydrophobic resin layer. Thus, members as shown in the drawings are obtained.

The members having constructions as shown in Figs. 5 and 6 may be produced, for example, by forming a layer comprising a photocatalytic oxide and optionally an inorganic oxide on the surface of a substrate, applying a hydrophobic resin precursor composition, capable of forming a hydrophobic resin layer, on a part of the above layer to form a coating, and subjecting the coating to such a reaction that the coating is converted to a hydrophobic resin layer. More specifically, a composition containing photocatalytic oxide particles and optionally a binder is provided. The composition is coated on a substrate. The coating is subjected to such a reaction that photocatalytic oxide particles are bonded to one another through the binder, thereby forming a photocatalytic oxide layer. A solution containing a hydrophobic resin precursor composition dissolved therein is then applied on a part of the photocatalytic oxide layer. The application of the solution on a part of the photocatalytic oxide layer may be carried out, for example, by applying the precursor composition through a slit having a specific opening pattern. Thereafter, the coating is then subjected to such a reaction that the precursor composition is converted to a hydrophobic resin layer, thereby forming a member.

Alternatively, members having constructions as shown in Figs. 5 and 6 may be produced as follows. Specifically, at the outset, a layer comprising a photocatalytic oxide and optionally an inorganic oxide is formed on the surface of a substrate in the same manner as described above. A composition comprising a photodecomposable hydrophobic material and a hydrophobic resin is applied on the above layer to form a coating. The coating is then irradiated with light to decompose and remove the photodecomposable hydrophobic material, and the coating is subjected to such a reaction that the coating is converted to a hydrophobic resin layer.

Further, members having constructions as shown in Figs. 5 and 6 may be produced as follows. Specifically, at the outset, a layer comprising a photocatalytic oxide and optionally an inorganic oxide is formed on the surface of a substrate in the same manner as described above. A composition comprising a hydrophobic material, dissolvable in a specific solvent, and a hydrophobic resin is applied onto the above layer to form a coating. The specific solvent is brought into contact with the surface of the coating to remove the hydrophobic material, thereby converting the coating layer to a hydrophobic layer to prepare a member. Hydrophobic materials dissolvable in specific solvents are known in the art. Examples of combinations of hydrophobic materials with specific solvents capable of dissolving them include: a combination of polyethylene or polystyrene with a petroleum; a combination of polyacetal or polyamide with a strong alkali; a combination of polyacetal, ABS, or acryl with a strong acid; a combination of low-density polyethylene, polyphenyl oxide, polystyrene, polysulfone, or polyvinyl chloride with a chloro compound solvent; a combination of polyacetal, ABS, polystyrene, or polyvinyl chloride with an amine compound; a combination or acryl, polystyrene, polysulfone, or polyvinyl chloride with a ketone, an ester, an ether; and a combination of ABS, acryl, polyphenylene oxide, polystyrene, or polyvinyl chloride with an aromatic acid compound solvent.

### [EXAMPLES]

### Example 1

A titanium oxide (anatase form) sol (Nissan Chemical Industries Ltd., TA-15, nitric acid peptization type, pH = 1), a silica sol (Japan Synthetic Rubber Co., Ltd., liquid A of Glasca, pH = 4), methyltrimethoxysilane (Japan Synthetic Rubber Co., Ltd., liquid B of Glasca), and ethanol were mixed together. The mixture was stirred for 2 to 3 min to prepare a coating liquid. The coating liquid was spray-coated on the surface of a glazed tile having a size of 5 x 10 cm square (TOTO, LTD., AB02E11). The coating was heat treated for 15 min at 200°C to form a surface layer comprising 11 parts by weight, based on charge weight, of titanium oxide (anatase form) particles, 6 parts by weight, based on charge weight, of silica, and 5 parts by weight, based on charge weight, of silicone. Thus, a member having antifouling activity was prepared. This member was used as sample 1.

The contact angle of sample 1 with water was 85° . In this case, the contact angle of the sample with water was measured with a contact angle goniometer (Kyowa Interface Science Co., Ltd., CA-X150). The contact angle was measured 30 sec after dropping of a water droplet through a microsyringe on the surface of the sample.

The surface of sample 1 was then irradiated with ultraviolet light from an ultraviolet light source (Sankyo Denki, a black light blue (BLB) fluorescent lamp) at an ultraviolet irradiation intensity of 0.3 mW/cm² for one day. The member thus prepared was used as sample 2. The contact angle of sample 2 with water was measured. As a result, it was found that the sample was hydrophilified to 0° in terms of the contact angle.

Next, the surface of sample 1 was analyzed by Raman spectroscopy. Further, sample 1 was irradiated with ultraviolet light from a mercury lamp for 2 hr at an ultraviolet irradiation intensity of 22.8 mW/cm² to prepare sample 3. The surface of sample 3 was analyzed by Raman spectroscopy. As a result, a peak derived from a methyl group observed on the surface of sample 1 was not observed in sample 3. Instead, a broad peak derived from a hydroxyl group was observed in sample 3.

From the above fact, it is considered that, due to photocatalytic action created in response of photoexcitation of the titanium oxide (anatase form) as the photocatalyst, organic groups bonded to silicon atoms in a silicone molecule on the surface of the coating are substituted by hydroxyl groups and the coating is hydrophilified.

### Example 2

A titanium oxide (anatase form) sol (Nissan Chemical Industries Ltd., TA-15), a silica sol (Japan Synthetic Rubber Co., Ltd., liquid A of Glasca), methyltrimethoxysilane (Japan Synthetic Rubber Co., Ltd., liquid B of Glasca), polytetrafluoroethylene (PTFE) particles (Daikin Industries, Ltd., Ruburon L-5), and ethanol were mixed together. The mixture was stirred for 2 to 3 min to prepare a coating liquid. The coating liquid was spray-coated (spray diameter: 0.5 mm) on the surface of a glazed tile substrate having a size of 5 x 10 cm square (TOTO, LTD., AB02E11). The coating was heat treated for 15 min at 200°C to form a surface layer comprising 33 parts by weight, based on charge weight, of titanium oxide (anatase form) particles, 66 parts by weight, based on charge weight, of polytetrafluoroethylene, 6 parts by weight, based on charge weight, of silica, and 5 parts by weight, based on charge weight, of silicone. The member thus formed was used as sample 4. The contact angle of sample 4 with water was 110° .

The surface of sample 4 was then irradiated with ultraviolet light from an ultraviolet light source (Sankyo Denki, a black light blue (BLB) fluorescent lamp) at an ultraviolet irradiation intensity of 0.3 mW/cm² for one day. The member thus prepared was used as sample 5. The contact angle of sample 5 with water was 97.4° , that is, was somewhat lower than that before the ultraviolet light irradiation. It is expected that photocatalytic action permits organic groups bonded to silicon atoms in a silicone molecule were substituted by hydroxyl groups, resulting in hydrophilification. Therefore, it is considered that the contact angle of the sample with water was somewhat lowered by the hydrophilification. That is, it is considered that, due to the photocatalytic action, organic groups on the surface of sample 5 was substituted by hydroxyl groups, resulting in the formation of a structure wherein both a hydrophilic portion, where a hydrophilified silicone was exposed to the outside air, and a water-repellent portion, where a water-repellent fluororesin was exposed to the outside air, were microscopically dispersed.

### Example 3

Sample 5 prepared in Example 2 was disposed outdoors to determine the capability of the surface of the sample to retain the cleanness against deposits and contaminants. For comparison, a glazed tile plate was disposed outdoors in the same manner as the sample 5.

The capability of the surface of the sample to retain the cleanness against deposits and contaminants was determined by disposing the sample under a roofed portion in the rooftop of a building as shown in Fig. 2 and exposing the sample for four months.

As a result, the glazed title plate was found to be somewhat soiled, whereas no soil was found for sample 5.

Before and after the 4-month outdoor exposure test, the color difference was measured for the surface of the member. The color difference was measured with a color difference meter (Tokyo Denshoku Co., Ltd.). ΔE* was used as the color difference according to the Japanese Industrial Standards (JIS) H0201. As a result, the change in color difference between before and after the outdoor exposure test was 2 for the glazed tile plate, whereas the change in color difference was as small as 0.5 for sample 5.

### Example 4

Photocatalytic titania particles (Ishihara Sangyo Kaisha Ltd., ST-41, 5 g), the surface of which had been coated with 1,3,5,7-tetramethylcyclotetrasiloxane by bringing 1,3,5,7-tetramethylcyclotetrasiloxane into contact in a gaseous phase with the photocatalytic titania particles, Voncoat (Dainippon Ink and Chemicals, Inc., vinyl acetate/acryl copolymer, 0.6 g), and 25 ml of water were mixed together in a paint shaker. The mixture was coated on an aluminum substrate. In this case, the proportion of the resin component to the titania was 1 in terms of the volume ratio. The coating was cured at 120°C to prepare sample 19.

The contact angle of sample 19 with water was measured and found to be 70° .

Further, the surface of the sample was treated with an aqueous sodium hydroxide solution having pH 10, further treated with dilute hydrochloric acid, and then irradiated with sunlight to prepare sample 20.

The contact angle of sample 20 with water was measured. As a result, it was found that the contact angle was reduced to 56° .

The surface of sample 20 was coated with an aqueous Methylene Blue solution, and the coated sample was irradiated with sunlight in the same manner as described above. One day after the initiation of the irradiation, it was found that the dye was faded, confirming that antifouling effect by the photocatalytic decomposition could be attained.

### Example 5

A titanium oxide (anatase form) sol (Ishihara Sangyo Kaisha Ltd., STS-11), polytetrafluoroethylene (PTFE) particles (Daikin Industries, Ltd., D-1), and distilled water were mixed together. The mixture was stirred for 30 min to prepare a coating liquid. The coating liquid was coated on a soda lime glass substrate having a size of 10 cm square by spray coating. The coating was heat-treated at 380°C for 3 min, thereby forming a surface layer comprising 4 parts by weight of titanium oxide (anatase form) particles and 6 parts by weight of polytetrafluoroethylene particles. Next, a reflective coating of aluminum was formed by vacuum deposition on the backside of the glass plate to prepare mirror sample 11.

Observation of the surface of sample 11 showed that this sample had a surface layer having such a structure that both a hydrophilic portion, where photocatalytic oxide particles were exposed so as to contact with the outside air, and a water-repellent portion, where a water-repellent fluororesin were exposed to so as to contact with the outside air, were microscopically dispersed on the surface thereof.

The contact angle of the surface of sample 11 with water was measured. In this case, the contact angle of the sample with water was measured with a contact angle goniometer (Kyowa Interface Science Co., Ltd., CA-X150). The contact angle was measured 30 sec after dropping of a water droplet on the surface of the sample. As a result, the contact angle of the sample with water was 120° , that is, a value more than 90°. When sample 11 was inclined, water droplets were rolled down.

The surface of sample 11 was then irradiated with ultraviolet light from an ultraviolet light source (Sankyo Denki, a black light blue (BLB) fluorescent lamp) at an irradiation intensity of 0.5 mW/cm² for about one day to prepare sample 12. The contact angle of sample 12 with water was measured and found to be 110° . When sample 12 was inclined, water droplets were rolled down.

### Example 6

A titanium oxide (anatase form) sol (Ishihara Sangyo Kaisha Ltd., STS-11), polytetrafluoroethylene (PTFE) particles (Daikin Industries, Ltd., D-1), and distilled water were mixed together. The mixture was stirred for 30 min to prepare a coating liquid. The coating liquid was coated on a slate substrate by spray coating. The coating was heat-treated at 380°C for 3 min, thereby forming a surface layer comprising 4 parts by weight of titanium oxide (anatase form) particles and 6 parts by weight of polytetrafluoroethylene particles. Thus, sample 21 was obtained.

Observation of the surface of sample 21 showed that this sample had a surface layer having such a structure that both a hydrophilic portion, where photocatalytic oxide particles were exposed so as to contact with the outside air, and a water-repellent portion, where a water-repellent fluororesin were exposed to so as to contact with the outside air, were microscopically dispersed on the surface thereof.

The contact angle of the surface of sample 21 with water was then measured. In this case, the contact angle of the sample with water was measured with a contact angle goniometer (Kyowa Interface Science Co., Ltd., CA-X150). The contact angle was measured 30 sec after dropping of a water droplet on the surface of the sample. As a result, the contact angle of the sample with water was 120° , that is, a value more than 90° . When sample 21 was inclined, water droplets were rolled down.

The surface of sample 21 was then irradiated with ultraviolet light from an ultraviolet light source (Sankyo Denki, a black light blue (BLB) fluorescent lamp) at an ultraviolet irradiation intensity of 0.5 mW/cm² for about one day to prepare sample 22. The contact angle of sample 22 with water was measured and found to be 110° . When sample 22 was inclined, water droplets were rolled down.

## Claims

1. A member comprising: a substrate; and a surface layer provided on the substrate, the surface layer comprising a photocatalytic oxide selected from the group consisting of anatase form of titanium oxide, zinc oxide, tin oxide, ferric oxide, dibismuth trioxide, tungsten trioxide, and strontium titanate:
a silicone resin represented by the following average composition formula (I):
RₚSiO_{(4-p)/2} (I)
wherein
R represents a group selected from the group consisting of a hydrogen atom and one or more organic groups; and
p is a number satisfying 0 < p < 2
or silica wherein the silica is amorphous silica, and a water-repellent fluororesin, the silicone or silica and the water-repellent fluororesin being present in a microscopically dispersed and exposed state on the outermost surface of the surface layer.

2. The member according to claim 1, wherein the photocatalytic oxide hydrophilifies the silicone resin or silica present on the outermost surface of the member by photocatalytic action created in response to photoexcitation.

3. The member according to claim 1, wherein the organic group is an alkyl or an aryl group.

4. The member according to any one of claims 1 to 3, wherein the presence of a hydrophobic portion derived from a hydrophobic resin and a hydrophilic portion derived from a silicone resin or silica in microscopically dispersed and exposed state on the outermost surface prevents both a hydrophilic material and a hydrophobic material from being deposited on the surface of the member, thus permitting the surface of the member to be kept clean.

5. The member according to any one of claims 1 to 4, wherein a hydrophobic portion derived from the water-repellent fluororesin and a hydrophilic portion derived from the silicone or silica each are present in at least one place per 10 nm² to 1 µm² on the outermost surface of the surface layer.

6. Use of the member according to claim 5 as a surface material in a material for the bottom of a ship, an outer wall material, a bathroom material, a bathtub material, a material for a water tank for the appreciation, or a surface material for equipment utilizing circulating water in its area which comes into contact with the circulating water.

7. The member according to any one of claims 1 to 4, wherein a hydrophobic portion derived from the water-repellent fluororesin and a hydrophilic portion derived from the silicone or silica each are present in at least one place per 0.1 mm² on the outermost surface of the surface layer.

8. The member according to any one of claims 1 to 4, wherein a hydrophobic portion derived from the water-repellent fluororesin and a hydrophilic portion derived from the silicone or silica each are present in at least one place per 0.2 µm² on the outermost surface of the surface layer.

9. The member according to any one of claims 1 to 4, wherein a hydrophobic portion derived from the water-repellent fluororesin and a hydrophilic portion derived from the silicone or silica each are present in at least one place per 1 mm² on the outermost surface of the surface layer.

10. Use of the member according to claim 7 as a building material for outdoors, a cover for a solar battery, a cover for a heat collector for a solar water heater, a handrail, an internal wall for a tunnel, a sound insulating wall, a sound barrier, a guard fence, a road structure, a blind, an insulator, a wheel, or a body for a vehicle.

11. The member according to claim 8 which has such a property that prevents growth of water droplets deposited on the surface thereof.

12. Use of the member according to claim 11 as a windowpane for a building, a windowpane for a vehicle, a windshield for a vehicle, a mirror for a vehicle, a road mirror, a lavatory mirror, a cover for an instrument board, a lens for spectacles, a helmet shield, goggles, or a showcase for retention of heat.

13. Use of the member according to claim 9 as a fin for a heat exchanger, an insulator, a bathtub, a counter for a lavatory, a kitchen counter, a roof material, a roof gutter, an antenna, or a power line.

14. The member according to claim 1 to 13, wherein the surface layer further comprises silver, copper, zinc, or a platinum group metal.

15. A composition for application on a substrate to form a surface layer having antifouling activity on the substrate, said composition comprising:
(a) a silicone resin coating precursor capable of forming a silicone resin coating or a silica coating precursor capable of forming a silica coating;
(b) a photocatalytic oxide selected from the group consisting of anatase form of titanium oxide, zinc oxide, tin oxide, ferric oxide, dibismuth trioxide, tungsten trioxide and strontium titanante dispersed in the coating precursor (a); and
(c) a water repellent fluororesin dispersed in the coating precursor (a).

16. The composition according to claim 15,
wherein the silicone resin coating precursor is a siloxane represented by the average composition formula RₚSiX_{q}O_{(4-p-q)/2}, wherein
R is as defined above in connection with the formula (I);
X represents an alkoxy group or a halogen atom; and
p is a number satisfying 0 < p < 2 and q is a number satisfying 0 < q < 4
or
wherein the silicone resin coating precursor is a hydrolyzable silane derivative represented by the general formula RₚSiX₍₄₋ₚ₎ wherein R is as defined above in connection with the formula (I);
X represents an alkoxy group or a halogen atom; and
p is 1 or 2
or wherein the silica coating precursor is a silicate represented by the average composition formula
SiX_{q}O_{(4-q)/2} wherein X represents an alkoxy group or a halogen atom and q is a number satisfying 0 < q < 4;
or
wherein the silica coating precursor is a tetrafunctional hydrolyzable silane derivative represented by the general formula SiX₄ wherein
X represents an alkoxy group or a halogen atom.

17. A process for producing the member according to any one of claims 1 to 5, 7 to 9, 11 and 14, comprising the steps of:
applying the composition according to claim 15 or 16 on a substrate;
subjecting the silicone resin coating precursor or the silica coating precursor to such a reaction that the silicone resin coating precursor or the silica coating precursor is converted to a silicone coating or a silica coating, thus forming an antifouling coating on the substrate, the antifouling coating comprising the silicone or silica and the water repellent fluororesin microscopically dispersed and exposed on the outermost surface of the surface layer.

## Patentansprüche

1. Element umfassend: ein Substrat und eine Oberflächenschicht, welche auf dem Substrat bereitgestellt ist, wobei die Oberflächenschicht ein photokatalytisches Oxid gewählt aus der Gruppe bestehend aus Titanoxid in der Anatas-Form, Zinkoxid, Zinnoxid, Eisen-III-Oxid, Dibismuthtrioxid, Wolframtrioxid und Strontiumtitanat;
ein Silikonharz der folgenden mittleren Zusammensetzungsformel (1):
RₚSiO_{(4-p)/2} (I)
worin R eine Gruppe darstellt, die gewählt wird aus der Gruppe bestehend aus einem Wasserstoffatom und einer oder mehrerer organischer Gruppen und
p eine Zahl ist, die der Bedingung 0 < p < 2 genügt;
oder Siliziumdioxid, worin das Siliziumdioxid amorphes Siliziumdioxid ist, und ein wasserabweisendes Fluorharz umfasst, wobei das Silikon oder Siliziumdioxid und das wasserabweisende Fluorharz mikroskopisch dispergiert und exponiert an der äußersten Oberfläche der Oberflächenschicht vorliegen.

2. Element nach Anspruch 1, worin das photokatalytische Oxid das an der äußersten Oberfläche des Elements befindliche Silikonharz oder Siliziumoxid durch photokatalytische Wirkung in Reaktion auf eine Photoanregung hydrophilisiert.

3. Element nach Anspruch 1, worin die organische Gruppe eine Alkyl- oder eine Arylgruppe ist.

4. Element nach einem der Ansprüche 1 bis 3, worin die Anwesenheit eines hydrophoben Anteils abgeleitet von einem hydrophoben Harz, und eines hydrophilen Anteils, abgeleitet von einem Silikonharz oder von Siliziumdioxid, in mikroskopisch dispergierter und exponierter Weise auf der äußersten Oberfläche ein hydrophiles Material und ein hydrophobes Material davon abhält, an der Oberfläche des Elements abgelagert zu werden, wodurch die Oberfläche des Elements sauber gehalten wird.

5. Element nach einem der Ansprüche 1 bis 4, worin ein hydrophober Anteil, abgeleitet von dem wasserabstoßenden Fluorharz, und ein hydrophiler Anteil, abgeleitet von dem Silikon oder Siliziumdioxid, jeweils an mindestens einer Stelle pro 10 nm² bis 1 µm² auf der äußersten Oberfläche der Oberflächenschicht vorhanden sind.

6. Verwendung des Elements gemäß Anspruch 5 als Oberflächenmaterial in einem Material für den Boden eines Schiffs, einem Außenwandmaterial, einem Badezimmermaterial, einem Badewannenmaterial, einem Material für einen Wasserbehälter zur Aufwertung oder einem Oberflächenmaterial für Geräte, welche zirkulierendes Wasser in einem Bereich einsetzen, welcher in Kontakt mit dem zirkulierenden Wasser kommt.

7. Element nach einem der Ansprüche 1 bis 4, worin ein hydrophober Bereich, abgeleitet von dem wasserabstoßenden Fluorharz, und ein hydrophiler Bereich, abgeleitet von dem Silikon oder dem Siliziumdioxid, jeweils an mindestens einer Stelle pro 0,1 mm² auf der äußersten Oberfläche der Oberflächenschicht vorhanden sind.

8. Element nach einem der Ansprüche 1 bis 4, worin ein hydrophober Bereich, abgeleitet von dem wasserabstoßenden Fluorharz, und ein hydrophiler Bereich, abgeleitet von dem Silikon oder dem Siliziumdioxid, jeweils an mindestens einer Stelle pro 0,2 µm² auf der äußersten Oberfläche der Oberflächenschicht vorhanden sind.

9. Element nach einem der Ansprüche 1 bis 4, worin ein hydrophober Bereich, abgeleitet von dem wasserabstoßenden Fluorharz, und ein hydrophiler Bereich, abgeleitet von dem Silikon oder dem Siliziumdioxid, jeweils an mindestens einer Stelle pro 1 mm² auf der äußersten Oberfläche der Oberflächenschicht vorhanden sind.

10. Verwendung des Elementes gemäß Anspruch 7 als Baumaterial für Außen, als eine Abdeckung für eine Solarbatterie, eine Abdeckung für einen Wärmesammler für einen Solarwasserwärmer, einen Handlauf, eine Innenwand für einen Tunnel, eine Lärmisolationswand, eine Lärmbarriere, einen Fangzaun, eine Straßenstruktur, eine Blende, einen Isolator, ein Rad oder einen Körper für ein Fahrzeug.

11. Elemente gemäß Anspruch 8, welches eine Eigenschaft hat, welche das Wachstum von Wassertröpfchen verhindert, die auf einer Oberfläche des Elements abgeschieden sind.

12. Verwendung des Elementes gemäß Anspruch 11 als eine Fensterscheibe für ein Gebäude, eine Fensterscheibe für ein Fahrzeug, eine Windschutzscheibe für ein Fahrzeug, einen Spiegel für ein Fahrzeug, einen Straßenspiegel, einen Badezimmerspiegel, eine Abdeckung für ein Armaturenbrett, eine Linse für Brillen, einen Helmschutz, Schutzbrillen oder eine Vitrine zum Halten von Wärme.

13. Verwendung des Elementes nach Anspruch 9 als einen Flügel bzw. eine Rippe für einen Wärmetauscher, einen Isolator, eine Badewanne, eine Theke für einen Waschraum, eine Theke für eine Küche, ein Dachmaterial, eine Dachrinne, eine Antenne oder eine Starkstromleitung.

14. Element nach einem der Ansprüche 1 bis 13, worin die Oberflächenschicht außerdem Silber, Kupfer, Zink oder ein Platingruppenmetall umfasst.

15. Zusammensetzung zum Aufbringen auf ein Substrat zur Bildung einer Oberflächenschicht mit schmutzabweisender Eigenschaft auf dem Substrat, wobei die Zusammensetzung umfasst:
a) eine Vorstufe für ein Silikonharz, welche eine Silikonharzbeschichtung bilden kann, oder eine Vorstufe für eine Siliziumdioxidschicht, die eine Siliziumdioxidbeschichtung bilden kann;
b) ein photokatalytisches Oxid gewählt aus der Gruppe bestehend aus Titanoxid in der Anatas-Form, Zinkoxid, Zinnoxid, Eisen-III-Oxid, Dibismuthtrioxid, Wolframtrioxid und Strontiumtitanat, dispergiert in der Vorstufe für die Beschichtung (a); und
c) ein wasserabweisendes Fluorharz dispergiert in der Vorstufe für die Beschichtung (a).

16. Zusammensetzung gemäß Anspruch 15,
worin die Vorstufe für die Silikonharzbeschichtung ein Siloxan der mittleren Zusammensetzungsformel RₚSiX_{q}O_{(4-p-q)/2} ist, worin
R wie oben im Zusammenhang mit Formel(I) definiert ist;
X eine Alkoxygruppe oder ein Halogenatom bedeutet; und
p eine Zahl ist, die die Bedingung 0 < p < 2 erfüllt, und q eine Zahl ist, die die Bedingung 0 < q < 4 erfüllt;
oder
worin die Vorstufe für die Silikonharzbeschichtung ein hydrolisierbares Silanderivat der allgemeinen Formel RₚSiX₍₄₋ₚ₎ ist,
worin R wie oben im Zusammenhang mit Formel (I) definiert ist;
X eine Alkoxygruppe oder ein Halogenatom ist; und
p 1 oder 2 ist;
oder worin die Vorstufe für die Siliziumdioxidbeschichtung ein Silikat der mittleren Zusammensetzungsformel SiX_{q}O_{(4-q)/2} ist,
worin X eine Alkoxygruppe oder ein Halogenatom ist und q eine Zahl ist, die die Bedingung 0 < q < 4 erfüllt;
oder
worin die Vorstufe für die Siliziumdioxidbeschichtung ein tetrafunktionales hydrolisierbares Silanderivat der allgemeinen Formel SiX₄ ist, worin X eine Alkoxygruppe oder ein Halogenatom bedeutet.

17. Verfahren zur Herstellung des Elements nach einem der Ansprüche 1 bis 5, 7 bis 9, 11 und 14, umfassend die folgenden Schritte:
Aufbringen der Zusammensetzung gemäß Anspruch 15 oder 16 auf ein Substrat;
Unterwerfen der Vorstufe für die Silikonharzbeschichtung oder der Vorstufe für die Siliziumdioxidbeschichtung unter solche Reaktionsbedingungen, dass die Vorstufe für die Silikonharzbeschichtung oder die Vorstufe für die Siliziumdioxidbeschichtung in eine Silikonbeschichtung oder Siliziumdioxidbeschichtung übergeführt wird, wodurch eine schmutzabweisende Beschichtung auf dem Substrat gebildet wird, wobei die schmutzabweisende Beschichtung das Silikon oder Siliziumdioxid und das wasserabweisende Fluorharz mikroskopisch dispergiert und exponiert an der äußersten Oberfläche der Oberflächenschicht umfasst.

## Revendications

1. Élément comprenant : un substrat ; et une couche de surface disposée sur le substrat, la couche de surface comprenant un oxyde photocatalytique choisi dans le groupe constitué par la forme anatase d'oxyde de titane, l'oxyde de zinc, l'oxyde d'étain, l'oxyde ferrique, le trioxyde de dibismuth, le trioxyde de tungstène et le titanate de strontium ;
une résine de silicone représentée par la formule de composition moyenne (I) suivante :
RₚSiO_{(4-p)/2} (I)
dans laquelle
R représente un groupe choisi dans le groupe constitué par un atome d'hydrogène et un ou plusieurs groupes organique ; et
p est un nombre satisfaisant 0 < p < 2
ou une silice, la silice étant une silice amorphe, et une fluororésine hydrofuge, la silicone ou la silice et la fluororésine hydrofuge étant présentes à un état dispersé microscopiquement et exposé sur la surface la plus extérieure de la couche de surface.

2. Élément selon la revendication 1, dans lequel l'oxyde photocatalytique hydrophilise la résine de silicone ou la silice présente sur la surface la plus extérieure de l'élément par l'action photocatalytique créée en réponse à la photoexcitation.

3. Élément selon la revendication 1, dans lequel le groupe organique est un groupe alkyle ou aryle.

4. Élément selon l'une quelconque des revendications 1 à 3, dans lequel la présence d'une partie hydrophobe dérivée d'une résine hydrophobe et d'une partie hydrophile dérivée d'une résine de silicone ou d'une silice à un état microscopiquement dispersé et exposé sur la surface la plus extérieure empêche à la fois un matériau hydrophile et un matériau hydrophobe d'être déposés sur la surface de l'élément, permettant ainsi à la surface de l'élément de rester propre.

5. Élément selon l'une quelconque des revendications 1 à 4, dans lequel une partie hydrophobe dérivée de la fluororésine hydrofuge et une partie hydrophile dérivée de la silicone ou de la silice sont chacune présentes à au moins un emplacement par 10 nm² à 1 µm² sur la surface la plus extérieure de la couche de surface.

6. Utilisation de l'élément selon la revendication 5 en tant que matériau de surface dans un matériau pour le fond d'un navire, matériau de mur extérieur, matériau de salle de bain, matériau de baignoire, matériau pour réservoir à eau pour l'appréciation ou matériau de surface pour équipement utilisant une eau en circulation dans sa zone qui rentre en contact avec l'eau en circulation.

7. Élément selon l'une quelconque des revendications 1 à 4, dans lequel une partie hydrophobe dérivée de la fluororésine hydrofuge et une partie hydrophile dérivée de la silicone ou de la silice sont chacune présentes à au moins un emplacement par 0,1 mm² sur la surface la plus extérieure de la couche de surface.

8. Élément selon l'une quelconque des revendications 1 à 4, dans lequel une partie hydrophobe dérivée de la fluororésine hydrofuge et une partie hydrophile dérivée de la silicone ou de la silice sont chacune présentes à au moins un emplacement par 0,2 µm² sur la surface la plus extérieure de la couche de surface.

9. Élément selon l'une quelconque des revendications 1 à 4, dans lequel une partie hydrophobe dérivée de la fluororésine hydrofuge et une partie hydrophile dérivée de la silicone ou de la silice sont chacune présentes à au moins un emplacement par 1 mm² sur la surface la plus extérieure de la couche de surface.

10. Utilisation de l'élément selon la revendication 7 en tant que matériau de construction pour extérieur, couvercle pour batterie solaire, couvercle pour collecteur de chaleur pour chauffe-eau solaire, main courante, mur interne pour tunnel, mur isolant acoustique, barrière acoustique, clôture de garde, structure de route, volet, isolant, roue ou carrosserie pour véhicule.

11. Élément selon la revendication 8, qui présente une propriété telle que la croissance des gouttelettes d'eau déposées sur sa surface est empêchée.

12. Utilisation de l'élément selon la revendication 11 en tant que vitre pour bâtiment, vitre pour véhicule, pare-brise pour véhicule, miroir pour véhicule, rétroviseur, miroir de salle de bain, couvercle pour tableau de bord, lentille pour lunettes, pare-visage, lunettes étanches ou vitrine pour la rétention de chaleur.

13. Utilisation de l'élément selon la revendication 9 en tant qu'ailette pour échangeur de chaleur, isolant, baignoire, comptoir de salle de bain, comptoir de cuisine, matériau de toit, gouttière, antenne ou ligne électrique.

14. Élément selon les revendications 1 à 13, dans lequel la couche de surface comprend également de l'argent, du cuivre, du zinc ou un métal du groupe du platine.

15. Composition destinée à être appliquée sur un substrat pour former une couche de surface ayant une activité antitache sur le substrat, ladite composition comprenant :
(a) un précurseur de revêtement en résine de silicone capable de former un revêtement en résine de silicone ou un précurseur de revêtement en silice capable de former un revêtement en silice ;
(b) un oxyde photocatalytique choisi dans le groupe constitué par la forme anatase de l'oxyde de titane, l'oxyde de zinc, l'oxyde d'étain, l'oxyde ferrique, le trioxyde de dibismuth, le trioxyde de tungstène et le titanate de strontium dispersé dans le précurseur de revêtement (a) ; et
(c) une fluororésine hydrofuge dispersée dans le précurseur de revêtement (a).

16. Composition selon la revendication 15, dans laquelle le précurseur de revêtement en résine de silicone est un siloxane représenté par la formule de composition moyenne RₚSiX_{q}O_{(4-p-q)/2}, dans laquelle
R est tel que défini précédemment pour la formule (I) ;
X représente un groupe alcoxy ou un atome d'halogène ; et
p est un nombre satisfaisant 0 < p < 2 et q est un nombre satisfaisant 0 < q < 4 ou
dans laquelle le précurseur de revêtement en résine de silicone est un dérivé de silane hydrolysable représenté par la formule générale RₚSiX₍₄₋ₚ₎, dans laquelle R est tel que défini précédemment pour la formule (I) ;
X représente un groupe alcoxy ou un atome d'halogène ; et
p est 1 ou 2
ou dans laquelle le précurseur de revêtement en silice est un silicate représenté par la formule de composition moyenne
SiX_{q}O_{(4-q)/2} dans laquelle X représente un groupe alcoxy ou un atome d'halogène et q est un nombre satisfaisant 0 < q < 4 ;
ou dans laquelle le précurseur de revêtement en silice est un dérivé de silane hydrolysable tétrafonctionnel représenté par la formule générale SiX₄, dans laquelle X représente un groupe alcoxy ou un atome d'halogène.

17. Procédé de fabrication de l'élément selon l'une quelconque des revendications 1 à 5, 7 à 9, 11 et 14, comprenant les étapes suivantes :
l'application de la composition selon la revendication 15 ou 16 sur un substrat ;
la soumission du précurseur de revêtement en résine de silicone ou du précurseur de revêtement en silice à une réaction telle que le précurseur de revêtement en résine de silicone ou le précurseur de revêtement en silice soit transformé en un revêtement en silicone ou un revêtement en silice, formant ainsi un revêtement antitache sur le substrat, le revêtement antitache comprenant la silicone ou la silice et la fluororésine hydrofuge dispersées microscopiquement et exposées sur la surface la plus extérieure de la couche de surface.
